# EUROPÄISCHE PATENTSCHRIFT

(11) **EP 3 555 688 B1**
(45) Veröffentlichungstag und Bekanntmachung des Hinweises auf die Patenterteilung: **04.09.2024**
(21) Anmeldenummer: 17811959.0
(22) Anmeldetag: 11.12.2017
(51) Int. Cl.: G02B 27/01, G03H 1/22

(54) **DATENBRILLE, BRILLENGLAS FÜR EINE DATENBRILLE UND VERFAHREN ZUM GENERIEREN EINES BILDES AUF DER NETZHAUT**
SMARTGLASSES, LENS FOR SMARTGLASSES AND METHOD FOR GENERATING AN IMAGE ON THE RETINA
LUNETTES INTELLIGENTES, VERRE DE LUNETTES POUR DES LUNETTES INTELLIGENTES ET PROCÉDÉ PERMETTANT DE GÉNÉRER UNE IMAGE SUR LA RÉTINE

(30) Priorität: 15.12.2016 DE 102016124538
(43) Veröffentlichungstag der Anmeldung: 23.10.2019
(73) Patentinhaber: Tooz Technologies GmbH, 73430 Aalen (DE)
(72) Erfinder: HILLENBRAND, Matthias, 07745 Jena (DE); KERWIEN, Norbert, 73563 Mögglingen (DE)
(74) Vertreter: PATERIS Patentanwälte PartmbB
(86) Internationale Anmeldenummer: PCT/EP2017/082198
(87) Internationale Veröffentlichungsnummer: WO 2018/108800

(56) Entgegenhaltungen:
- WO-A1-2013/163347
- WO-A1-2016/105281
- US-A1- 2015 268 467
- STEPHAN REICHELT ET AL: "Holographic 3-D Displays -Electro-holography within the Grasp of Commercialization", 1 April 2010 (2010-04-01), XP055149317, Retrieved from the Internet <URL:http://www.intechopen.com> [retrieved on 20141028], DOI: 10.5772/8650

## Beschreibung

Die Erfindung betrifft Datenbrillen, die dem menschlichen Auge eine zweidimensionale Bildinformation auf der Netzhaut bereitstellen. Daneben betrifft die Erfindung ein Brillenglas für eine derartige Datenbrille sowie ein Verfahren zum Generieren eines Bildes auf der Netzhaut einer eine Datenbrille tragenden Person.

Eine Bildinformation auf der Netzhaut kann auf vielfältige Arten generiert werden. Üblich sind sowohl scannende als auch nicht-scannende Systeme. Bei scannenden Systemen wird das wahrgenommene Bild dadurch generiert, dass sowohl die Lage als auch die Stärke einer quasi punktförmigen Intensitätsverteilung auf der Netzhaut zeitlich moduliert werden. Ein Beispiel für ein scannendes System ist in WO 2014/155288 A2 beschrieben. Bei nicht scannenden Systemen werden die Pixel eines ausgedehnten Displays gleichzeitig auf die Netzhaut abgebildet. Display und Netzhaut müssen sich hierfür in optisch zueinander konjugierten Ebenen befinden.

Häufig ist es wünschenswert, neben der Bereitstellung einer zusätzlichen Bildinformation auch den ungestörten Blick auf die Umgebung zuzulassen (Englisch: see-through wearables). Diese Anforderung verhindert Lösungen, bei denen ein intransparenter Bildgeber und eine zugehörige Abbildungsoptik direkt vor dem Auge angeordnet werden. Deshalb wird die Bildinformation üblicherweise außerhalb des Sichtbereichs des Auges generiert, und das erzeugte Bild wird mit Hilfe einer Optik in der gewünschten Blickrichtung vor dem Auge eingespiegelt. Der Aufwand für die Bereitstellung der zusätzlichen Bildinformationen steigt dabei überproportional mit der Größe des Sichtfeldes, in dem die Bildinformationen zur Verfügung gestellt werden. Die Größe des maximal bereitstellbaren Sichtfeldes ist häufig durch physikalische Gesetzmäßigkeiten der Bilderzeugung oder mechanische, ergonomische oder ästhetische Restriktionen im Design der Datenbrille beschränkt. Restriktionen durch physikalische Gesetzmäßigkeiten können beispielsweise durch den Grenzwinkel für Totalreflexion gegeben sein, wenn der Abbildungsstrahlengang von einem beispielsweise im Brillenbügel angeordneten Bildgeber mittels Totalreflexion durch das Brillenglas zu einer im Brillenglas angeordneten Auskopplungsstruktur zum Auskoppeln des Abbildungsstrahlengangs in Richtung auf das Auge geleitet wird. Ein Beispiel für eine Datenbrille, in der der Abbildungsstrahlengang mittels Totalreflexion zu einer Auskopplungsstruktur im Brillenglas geleitet wird ist beispielsweise in DE 10 2013 223 963 A1 und DE 10 2013 223 964 B3 beschrieben. Mechanische, ergonomische oder ästhetische Restriktionen können beispielsweise durch zur Verfügung stehenden Bauraum, das Gewicht der Komponenten oder die Akzeptanz bestimmter Designs durch den Nutzer gegeben sein.

Als Lösung für Datenbrillen, die größere Sichtfelder für die eingeblendete Bildinformation ermöglichen, kommen Systeme, bei denen ein teiltransparenter Bildgeber direkt ins Brillenglas eingebettet ist, in Frage. Für eine Abbildung der auf dem Bildgeber dargestellten Bildinformation auf die Netzhaut des Auges eines Betrachters ist es jedoch erforderlich, dass der Bildgeber und die Netzhaut in optisch konjugierten Ebenen liegen. Üblicherweise befindet sich ein Brillenglas in einem Abstand von 10 bis 30 mm zum Auge und liegt damit außerhalb der deutlichen Sehweite eines normalsichtigen Menschen. Mit anderen Worten, bei normalsichtigen Menschen kann das Auge die Linsenbrennweite nicht so adaptieren, dass das auf dem Bildgeber dargestellte Bild scharf gesehen werden kann. In solchen Fällen ist eine zusätzliche Kontaktlinse erforderlich, die es dem Träger ermöglicht, auf das Brillenglas zu fokussieren, wie dies beispielsweise in US 8,441,731 B2 beschrieben ist. Die Kontaktlinse reduziert jedoch die Ergonomie und ist allgemein mit Akzeptanzproblemen und medizinischen Bedenken verbunden.

Ein Ausweg stellt die Bildgebung auf der Basis kohärenter Bildtransformationen dar. Diese Art der Bildgebung ermöglicht es, das Display außerhalb einer zur Netzhaut konjugierten optischen Ebene anzuordnen und trotzdem ein Bild auf der Netzhaut generieren zu können. Hierbei wird ausgenutzt, dass die Bestrahlungsstärkeverteilung auf der Netzhaut aus einer kohärenten Addition der jeweils von den einzelnen Pixeln des Bildgebers ausgehenden Wellenfronten gebildet wird. Diese kohärente Addition lässt sich mathematisch über ein Beugungsintegral beschreiben. Sofern das optische System eine moderate numerische Apertur aufweist, kann eine sogenannte skalare Näherung vorgenommen werden, in der die Beugungsintegrale näherungsweise berechnet werden können. Verbreitet ist die sogenannte Fouriernäherung, die besagt, dass die Fouriertransformation einer komplexen Amplitudenverteilung der Wellenfront im Fernfeld bzw. in der Brennebene einer idealen Linse beobachtet werden kann. Mit anderen Worten, wenn der Betrachter eine in der Brennebene der Linse angeordnete komplexe Amplitudenverteilung, also die Verteilung von Amplitude und Phase, betrachtet, die durch ein zweidimensionales Bild gegeben ist, sieht er die Fouriertransformation dieses Bildes. Da die optischen Beziehungen, die dieses Verhalten beschreiben, umkehrbar sind, besteht auch die Möglichkeit, statt einer das Bild selbst repräsentierenden komplexen Amplitudenverteilung eine die Fouriertransformation des Bildes repräsentierende Fourierverteilung in der Brennebene anzuzeigen. In diesem Fall wird auf der Netzhaut das zweidimensionale Bild dargestellt. Solche Verfahren sind beispielsweise in Stijns "Basic demonstrations in diffractive and Fourier optics: use your eye as Fourier transformer.", Proc. SPIE 3190, 1997, Seiten 368 - 378 oder in WO 02/091061 A1 beschrieben.

Es existieren bereits Ansätze, in denen das beschriebene Prinzip der Fourieroptik in Verbindung mit Brillen zur Anwendung kommt. In DE 197 58 395 C2, US 6,452,699 B1 und US 6,961,159 B2 werden statische Brillensysteme vorgestellt, bei denen ein festes Beugungsmuster zum Beispiel über ein in der Brille integriertes diffraktives optisches Element (DOE) erzeugt wird. In US 2009/103151 A1 und US 2009/219380 A1 wird über einen dynamischen Bildgeber ein Zwischenbild auf einer Streuscheibe erzeugt. Dieses Zwischenbild wird mit dem menschlichen Auge betrachtet. In der US 5,579,161 wird ein modulierbarer Bildgeber zusammen mit einem gestreckten Abbildungssystem, das mehrere rotationssymmetrische Linsen enthält, vor dem Auge positioniert. In der US 2008/192045 A1 wird ein Headup-Display mit kohärentem Bildgeber beschrieben. Die US 2013/106847 A1 stellt Methoden zur Erhöhung der Datenrate und zur Verbesserung des Kontrastes von Datenbrillen vor, die auf dem Fouriertransformationsprinzip beruhen. Hierbei ist der Bildgeber im Bügel einer Datenbrille angeordnet. Die Bildinformation wird dem Betrachter über ein vor dessen Auge angeordnetes Umlenkelement bereitgestellt. Auch die WO 02/091061 A1 beschreibt eine Datenbrille, die auf dem Fouriertransformationsprinzip beruht. Im Unterschied zur Datenbrille aus US 2013/106847 A1 ist der Bildgeber jedoch ins Brillenglas integriert.

Aus US 2014/0146133 ist ein transparentes holografisches Display bekannt.

Aus WO 2014/209244 A1 ist eine Datenbrille bekannt, in der ein Bildgeber, auf dem ein auf der Netzhaut darzustellendes Bild angezeigt wird, außerhalb einer zur Netzhaut konjugierten Ebene angeordnet ist. Um auf der Netzhaut dennoch ein Abbild des auf dem Bildgeber gezeigten Bildes generieren zu können, wird auf das Prinzip der Lochkamera zurückgegriffen. Dabei wird ein räumlicher Lichtmodulator (SLM, englisch: spatial light modulator) vor dem Auge angeordnet, der vom Brillenbügel aus mittels einer Punktlichtquelle beleuchtet wird. Das durch den Modulator hindurchtretende Licht wird von einer Matrix aus Mikroreflektoren, die auf der Rückseite des Modulators angeordnet sind, in Richtung auf das Auge zurückreflektiert.

Aus WO 2013/163347 A1 ist ein Lichtleiter für ein Head Mounted Display bekannt, in dem die Lichtleitung über innere Totalreflektion erfolgt und die Einkopplung in den sowie Auskopplung aus dem Lichtleiter mittels diffraktiver Elemente stattfindet. Zur Vergrößerung des Sichtfeldes kommt eine Mehrzahl an diffraktiven Auskoppelstrukturen zum Einsatz.

Aus US 2015/0268467 A1 ist ein Lichtleiter bekannt, der auf seiner Vorderseite und seiner Rückseite jeweils mit einem Reflektionshologramm versehen ist.

Die WO 2016/105281 A1 beschreibt ein sogenanntes "Near-to-Eye Display", welches als räumlicher Lichtmoderator (SLM Spatial Light Modulator) ausgebildet ist, der die Phase und/oder die Amplitude einer einfallenden Welle moduliert. Dabei erfolgt die Modulation auf Basis einer Rückwärtspropagation der Wellenfront. Der räumliche Lichtmodulator kann Teil des Brillenglases einer Datenbrille sein.

Die vorgestellten Lösungsansätze sind in Datenbrillen mit im Brillenglas integriertem teiltransparenten Display (see-through displays) jedoch nur eingeschränkt nutzbar:
- Ist der kohärente Bildgeber außerhalb des Gesichtsfeldes angeordnet, bestehen bei Vergrößerung des Gesichtsfeldes die gleichen Schwierigkeiten bei der Bildleitung zum Auge wie sie bei den oben beschriebenen klassischen Abbildungssystemen und den Scansystemen bestehen, etwa Bauraumprobleme.
- Die mit heutigen kohärenten Lichtmodulatoren erreichbaren Pixelgrößen sind nach unten beschränkt. Typische Pixelgrößen liegen heutzutage bei 5 µm oder darüber. Dies führt zu einer Limitierung der mit dem Lichtmodulator erreichbaren Umlenkwinkel - und somit zu einer Limitierung des Feldes und auch der erreichbaren Eyebox. Die Eyebox ist dabei derjenige dreidimensionale Bereich der Lichtröhre im Abbildungsstrahlengang, in dem sich die Augenpupille bewegen kann, ohne dass eine Vignettierung des Bildes erfolgt. Da bei einer Datenbrille der Abstand des Auges in Bezug auf die Datenbrille im Wesentlichen konstant ist, kann die Eyebox auf eine zweidimensionale Eyebox, welche lediglich die Drehbewegungen des Auges berücksichtigt, reduziert werden. In diesem Fall entspricht die Eyebox im Wesentlichen der Austrittspupille der Datenbrille am Ort der Eintrittspupille des Auges. Letztere ist in der Regel durch die Augenpupille gegeben. Hinsichtlich der Eyebox ist zu beachten, dass größere Gesichtsfelder eine stärkere Drehung des Auges erforderlich machen, um die nötigen Bildinformationen auf die zentrale Netzhaut, also die Stelle des schärfsten Sehens, abzubilden.

Angesichts des beschriebenen Standes der Technik ist es eine Aufgabe der vorliegenden Erfindung, ein vorteilhaftes Brillenglas für eine Datenbrille sowie eine vorteilhafte Datenbrille zur Verfügung zu stellen. Darüber hinaus ist es eine Aufgabe der vorliegenden Erfindung, ein vorteilhaftes Verfahren zum Generieren eines Bildes auf der Netzhaut einer eine Datenbrille tragenden Person zur Verfügung zu stellen.

Die erste Aufgabe wird durch ein Brillenglas nach Anspruch 1 bzw. eine Datenbrille nach Anspruch 9 gelöst. Die zweite Aufgabe wird durch ein Verfahren nach Anspruch 13 gelöst. Die abhängigen Ansprüche enthalten jeweils vorteilhafte Ausgestaltungen der Erfindung.

Ein erfindungsgemäßes Brillenglas für eine Datenbrille umfasst:
- wenigstens eine am Rand des Brillenglases angeordnete und kohärentes Licht aussendende Lichtquellenanordnung oder wenigstens einen am Rand des Brillenglases angeordneten Bereich zum Einkoppeln des Lichtes einer kohärentes Licht aussendenden Lichtquellenanordnung oder wenigstens eine in das Brillenglas eingebettete Lichtquellenanordnung. Die Lichtquellenanordnung kann wenigstens eine primäre Lichtquelle und/oder wenigstens eine sekundäre Lichtquelle umfassen. Als primäre Lichtquelle soll hierbei eine selbstleuchtende Lichtquelle, wie beispielsweise eine Glühlampe, ein Lumineszenzstrahler, ein Laser, etc. angesehen werden. Unter einer sekundären Lichtquelle soll eine nicht selbst leuchtende Lichtquelle angesehen werden, etwa das Ausgangsende einer Lichtleitfaser. Die Lichtquellenanordnung bzw. der Bereich zum Einkoppeln des Lichtes ist dabei am Rand des Brillenglases angeordnet. Alternativ besteht aber auch die Möglichkeit, die Lichtquellenanordnung in das Brillenglas einzubetten, bspw. in Form eines sog. phased Arrays, also einer zweidimensionalen Anordnung von Lichtquellen mit einer festen oder zumindest bekannten Phasenbeziehung. Als kohärentes Licht soll dabei nicht nur hoch kohärentes Licht wie beispielsweise Laserlicht angesehen werden, sondern jedes Licht, das eine zum Generieren des Abbildes auf der Netzhaut ausreichende Kohärenzlänge sowie eine ausreichende räumliche Kohärenz aufweist. Räumlich kohärentes Licht kann beispielsweise auch mit Hilfe einer klassischen Glühlampe oder mit Hilfe eines Lumineszenzstrahlers erzeugt werden, indem das von der Glühlampe oder dem Lumineszenzstrahler ausgehende Licht mittels einer Lochblende abgeblendet wird. Die Blendenöffnung kann dann als näherungsweise punktförmige sekundäre Lichtquelle angesehen werden. Punktlichtquellen haben eine hohe räumliche Kohärenz. Das Ausmaß der räumlichen Kohärenz kann dabei durch die Größe des Loches der Lochblende bestimmt werden. Zeitliche Kohärenz kann durch Einengen des Emissionsspektrums mittels eines Spektralfilters oder eines Interferenzfilters erreicht werden.

- Ein transparentes oder teiltransparentes Display, welches derart am oder im Brilleglas angeordnet ist, dass von der kohärentes Licht aussendenden Lichtquellenanordnung ausgehendes kohärentes Licht durch das Display hindurchtritt oder von dem Display reflektiert wird. Zudem ist das Display derart ausgebildet, dass durch eine entsprechende Ansteuerung des Displays die Wellenfront des kohärenten Lichtes in ihrer Amplitude und/oder ihrer Phase modulierbar ist. Das transparente oder teiltransparente Display kann dabei auf eine Oberfläche des Brillenglases aufgebracht sein oder es kann in das Brillenglas eingebettet sein.
- Eine Verformungseinrichtung zum Verformen der Wellenfront des kohärenten Lichtes vor oder nach der Modulation durch das Display derart, dass ein von einem Pixel ausgehender Lichtkegel auf einen Punkt am oder im Auge gerichtet ist oder durch ein Verformen der Wellenfront des kohärenten Lichtes mittels der Verformungseinrichtung ein von einem Pixel ausgehender Lichtkegel in Richtung auf einen Punkt am oder im Auge, bspw. auf die Pupillenmitte, den Augendrehpunkt oder einen Punkt zwischen diesen beiden Punkten zumindest eines geradeaus schauenden Auges, abgelenkt wird. Die Verformungseinrichtung kann beispielsweise auf einer Oberfläche des Brillenglases angeordnet sein, etwa auf der dem Auge abgewandten Oberfläche, wenn das Display auf der dem Auge zugewandten Oberfläche angeordnet ist, oder umgekehrt. Wenn das Display in das Brillenglas eingebettet ist, kann die Verformungseinrichtung entweder auf der dem Auge zugewandten Brillenglasfläche oder der dem Auge abgewandten Brillenglasfläche angeordnet sein. Außerdem ist es möglich sowohl das Display als auch die Verformungseinrichtung in das Brillenglas einzubetten. Die Verformungseinrichtung kann dabei wiederum auf der dem Auge zugewandten Seite oder der von dem Auge abgewandten Seite des Displays angeordnet sein. In allen Fällen können auch zwei Verformungseinrichtungen vorhanden sein, wobei eine Verformungseinrichtung an der dem Auge zugewandten Seite und eine an der von dem Auge abgewandten Seite des Displays angeordnet ist.

Das erfindungsgemäße Brillenglas nutzt kohärente Strahlung, die außerhalb oder am Rand des in Durchsicht genutzten Sichtbereiches des Brillenglases erzeugt und in das Brillenglas eingekoppelt wird. Zur Einkopplung der kohärenten Strahlung ins Brillenglas sind gegebenenfalls entsprechende Hilfsoptiken vorhanden, etwa in Form von refraktiven, diffraktiven oder holografischen Elementen. Es ist jedoch auch möglich, Lichtquellen wie beispielsweise Laserdioden direkt am Brillenglas anzuordnen. Wenn von der Anordnung des Einkopplungsbereiches bzw. der Lichtquelle am Rand des Brillenglases die Rede ist, kann der Einkopplungsbereich bzw. die Lichtquelle an einer Umfangsfläche des Brillenglases angeordnet sein oder an einer dem Auge zugewandten oder vom Auge abgewandten Fläche, sofern der Einkopplungsbereich bzw. die Lichtquelle am Rand des zur Durchsicht genutzten Bereiches oder außerhalb des zur Durchsicht genutzten Bereiches des Brillenglases liegt.

Mit einer Datenbrille, welche ein erfindungsgemäßes Brillenglas aufweist, lässt sich das erfindungsgemäße Verfahren zum Generieren eines Bildes auf der Netzhaut einer eine Datenbrille tragenden Person realisieren. Das Erzeugen des Bildes geschieht dabei dadurch, dass
- ein auf der Netzhaut zu generierendes Bild vorgegeben wird,
- eine Wellenfront am Ort des Netzhaut ermittelt wird, die auf der Netzhaut zu dem zu generierenden Bild führt,
- das Display außerhalb einer zur Netzhaut der die Datenbrille tragenden Person optisch konjugierten Ebene positioniert wird,
- durch Rückwärtspropagation der Wellenfront am Ort des Netzhaut eine Wellenfront unmittelbar hinter dem Display ermittelt wird,
- das Display derart angesteuert wird, dass die Wellenfront des von der kohärenten Licht aussenden Lichtquellenanordnung ausgehenden kohärenten Lichtes so moduliert wird, dass unmittelbar hinter dem Display eine Wellenfront entsteht, die der durch Rückwärtspropagation der Wellenfront am Ort des Netzhaut ermittelten Wellenfront entspricht, und
- durch ein Verformen der Wellenfront des kohärenten Lichtes mittels der Verformungseinrichtung die Wellenfront des Beleuchtungslichtes, mit dem die Pixel des Displays beleuchtet werden, so eingestellt wird, dass ein von einem Pixel ausgehender Lichtkegel auf einen Punkt am oder im Auge gerichtet ist oder durch ein Verformen der Wellenfront des kohärenten Lichtes mittels der Verformungseinrichtung ein von einem Pixel ausgehender Lichtkegel in Richtung auf einen Punkt am oder im Auge, bspw. auf die Pupillenmitte, den Augendrehpunkt oder einen Punkt zwischen diesen beiden Punkten zumindest eines geradeaus schauenden Auges, abgelenkt wird.

Die Pixel des Displays stellen dabei eine beugende Struktur dar, die die einfallende Wellenfront modifizieren und ablenken. Durch die Ablenkung mittels der Verformungseinrichtung kann erreicht werden, dass ein von einem Pixel ausgehender Lichtkegel der Wellenfront in Richtung auf einen Punkt an oder in einem optimal in Bezug auf das Brillenglas positionierten Auge gerichtet ist. Der Ablenkwinkel kann dabei für manche Pixel auch den Wert null besitzen. Grundsätzlich ist auch ein Verformen der Wellenfront sowohl vor dem Auftreffen auf das Display als auch nach dem Durchtritt durch das Display oder nach der Reflektion am Display möglich. Hierzu sind allerdings zwei Verformungseinrichtungen nötig. Wenn im Rahmen der vorliegenden Erfindung davon die Rede ist, dass die Lichtkegel auf einen Punkt am oder im Auge gerichtet sind, bzw.in Richtung auf die Pupillenmitte oder den Augendrehpunkt abgelenkt werden, soll dies bedeuten, dass wenigstens ein Abschnitt des Lichtkegels diesen Punkt trifft.

Wenn das Auge nicht geradeaus schaut oder ein Versatz des Auges in Bezug auf die optimale Position des Brillenglases vorliegt, kann es trotzdem passieren, dass ein Lichtkegel die Pupillenmitte oder den Augendrehpunkt verfehlt, so dass nicht die gesamte Bildinformation wahrgenommen wird. In einer Ausgestaltung der Erfindung wird das Wahrnehmen der gesamten Bildinformation jedoch dadurch weitgehend sichergestellt, dass das transparente oder teiltransparente Display Gruppen von Display-Subregionen aufweist, wobei die Display-Subregionen der einzelnen Gruppen über das Display wechselweise lateral verteilt angeordnet sind und jede Gruppe von Display-Subregionen dasselbe Bild generiert. Die Verformungseinrichtung zum Verformen der Wellenfront des kohärenten Lichtes vor oder nach der Modulation umfasst dann Gruppen von über die Verformungseinrichtung wechselweise lateral verteilt angeordnet Verformungseinrichtung-Subregionen, wobei jede der Gruppen von Verformungseinrichtung-Subregionen einer Gruppe von Display-Subregionen zugeordnet ist und wobei die verschiedenen Gruppen von Verformungseinrichtung-Subregionen die Wellenfront derart unterschiedlich verformen, dass die Lichtkegel von dieselbe Bildinformation darstellenden benachbarten Display-Subregionen unterschiedlicher Gruppen von Display-Subregionen auf unterschiedliche Punkte im Raum gerichtet sind. Die Gruppen von Verformungseinrichtung-Subregionen können dann derart für unterschiedliche Augenpositionen oder unterschiedliche Blickrichtungen optimiert werden, dass die von unterschiedlichen Gruppen von Display-Subregionen ausgehenden Lichtkegel die zum Erreichen der Augenpupille bzw. des Augendrehpunktes für die jeweilige Augenposition oder Blickrichtung passenden Lichtkegelrichtungen generieren. Auf diese Weise kann der Nutzer für eine Vielzahl von Augenpositionen und Blickrichtungen jeweils wenigstens die von einer der Gruppen von Display-Subregionen ausgehenden Lichtkegel wehrnehmen, so dass er die Bildinformation des Displays in jeder der Augenpositionen und Blickrichtungen erhält. Dadurch ist eine Große Eyebox realisierbar. Wenn die Gruppen von Display-Subregionen und Verformungseinrichtung-Subregionen geeignet ausgestaltet sind, kann auch erreicht werden, dass in jeder Augenposition oder Blickrichtung gleichzeitig jeweils mehr als eine Gruppe von Display-Subregionen zur Bilderzeugung auf der Netzhaut beiträgt, wodurch sich unerwünschte Intensitätsschwankungen bei kohärenter Beleuchtung, sog. Speckles, reduzieren lassen.

In einer alternativen Ausgestaltung der Erfindung lässt sich dieselbe Wirkung auch erzielen, wenn die Verformungseinrichtung zum Verformen der Wellenfront des kohärenten Lichtes vor oder nach der Modulation statt der verschiedenen Gruppen von Verformungseinrichtung-Subregionen eine Anzahl von Verformungsschichten aufweist, wobei jede Verformungsschicht einer der Gruppen von Display-Subregionen zugeordnet ist. Mit anderen Worten, in diese Variante ist die Verformungseinrichtung nicht lateral segmentiert, sondern weist mehrere hintereinander liegende Schichten auf, die jeweils das komplette Display ausleuchten. In diesem Fall würden die der jeweiligen Verformungsschicht nicht zugeordneten Display-Subregionen den auf sie treffenden Lichtanteil in die falsche Richtung ablenken, so dass dieser nicht ins Auge gelangt.

Außerdem ist es auch möglich, zur Erzielung derselben Wirkung statt eines Brillenglases mit einem segmentierten Display ein Brillenglas mit einer Anzahl von Displayschichten zu verwenden, bei denen die hinter der Displayschicht entstehenden Wellenfronten jeweils an unterschiedliche Blickwinkel oder unterschiedliche Werte des Versatzes des Auges angepasst sind, wobei die Verformungseinrichtung des Brillenglases zum Verformen der Wellenfront des kohärenten Lichtes vor oder nach der Modulation eine Anzahl von Verformungsschichten aufweist, die jeweils einer der Displayschichten zugeordnet sind. Dabei können je Display und zugeordneter Verformungseinrichtung leicht unterschiedliche Wellenlängen Verwendung finden, um die Informationspfade zu separieren.

In einer Ausgestaltung des erfindungsgemäßen Verfahrens lässt sich dieselbe Wirkung auch erzielen, indem die Ansteuerung des Displays derart erfolgt, dass die hinter dem Display entstehende Wellenfront Lichtkegel aufweist, die jeweils in eine vorgegebene Richtung geneigt sind. Dabei kann in einer ersten Alternative die vorgegebene Richtung zeitlich variieren, oder es kann in einer zweiten Alternative die Blickrichtung des Auges erfasst und die vorgegebene Richtung an die Blickrichtung des Auges angepasst werden. In der ersten Alternative kann bspw. die zeitliche Variation derart erfolgen, dass sich eine Anzahl von vorgegebenen Richtungen zyklisch durchlaufen wird. Jede der vorgegebenen Richtungen ist dabei auf einen bestimmten Blickwinkel oder einen Versatz des Auges angepasst, so dass durch die zyklisch durchlaufenen Richtungen Bilder für eine Anzahl von Blickwinkel oder verschiedene Werte des Versatzes des Auges generiert werden können. Das zyklische Durchlaufen der Bilder sollte dabei mit einer hinreichend hohen Geschwindigkeit erfolgen, so dass kein Flimmern des wahrgenommenen Bildes entsteht.

Mit dem erfindungsgemäßen Brillenglas und dem erfindungsgemäßen Verfahren kann durch Modulieren der Wellenfront in der Fokusebene der Augenlinse ein Bild auf der Netzhaut generiert werden, wobei das erreichbare Sichtfeld nicht durch das Leiten eines von einem außerhalb des Brillenglases angeordneten Bildgeber ausgehenden Abbildungsstrahlengangs durch das Brillenglas zu einer Auskopplungsstruktur beschränkt wird. Zudem kann mit Hilfe der Verformung der Wellenfront durch die Verformungseinrichtung der Feldwinkel für die Abbildung vergrößert werden, ohne dass hierzu die Pixel des Bildgebers verringert werden müssen. Darüber hinaus ermöglicht es die Verformung der Wellenfront durch die Verformungseinrichtung auch, Abbildungsfehler des Auges einer eine Datenbrille mit einem erfindungsgemäßen Brillenglas nutzenden Person durch eine geeignete Verformung der Wellenfront auszugleichen. Mit anderen Worten, nutzerspezifische Fehlsichtigkeiten und entsprechende Korrekturflächen im Brillenglas können bei der Ansteuerung des Displays zum Erzeugen der Modulation der Wellenfront berücksichtigt werden.

Insbesondere wenn das Brillenglas eine Brillenglaskrümmung aufweist, kann das transparente oder teiltransparente Display eine Displaykrümmung aufweisen, die an die Brillenglaskrümmung angepasst ist.

Das transparente oder teiltransparente Display kann vollständig oder teilweise aus optisch transparenten Materialien aufgebaut sein. Hierbei können die Elektronik und/oder die Kontaktierung und/oder optisch wirksame Komponenten transparent aufgebaut sein. Wenn das Display ein transparentes Display ist, sind alle Komponenten aus transparenten Materialien aufgebaut. Wenn das Display dagegen ein teiltransparentes Display ist, weist es intransparente Bereiche auf, etwa Bereiche der Elektronik oder der Kontaktierung, wobei die Abmessungen dieser intransparenten Bereiche kleiner als der minimale Pupillendurchmesser des Auges sind, insbesondere kleiner als 0,5 mm und vorzugsweise kleiner als 0,1 mm. Die intransparenten Bereiche sind dann durch transparente Bereiche voneinander getrennt. Dadurch, dass die intransparenten Bereiche kleiner als der minimale Pupillendurchmesser des Auges sind und diese außerhalb einer zur Netzhaut optisch konjugierten Ebene liegen, lässt sich für einen Betrachter die Umgebung durch das Display hindurch weiter wahrnehmen.

Um die für die Vergrößerung des wahrnehmbaren Feldes erforderliche Verformung der Wellenfront nicht zu groß werden zu lassen, ist es vorteilhaft, wenn die Pixel des transparenten oder teiltransparenten Displays Abmessungen von nicht mehr als 7,5 µm, vorzugsweise von nicht mehr als 5 µm aufweisen. Bei Pixelgrößen von 7,5 µm lassen sich ohne Verformung der Wellenfront Feldwinkel von +/- 2,03° realisieren, bei Pixeldurchmessern von 5 µm Feldwinkel von +/-3,05°. Da somit von jedem Pixel ein Lichtkegel mit einem maximalen Öffnungswinkel von 6,1° ausgeht, kann es passieren, dass Lichtkegel, die von Pixeln am Rand des Sichtfeldes ausgehen, die Pupille verfehlen. Durch die Verformung der Wellenfront erfolgt im Rahmen der vorliegenden Erfindung jedoch eine Beleuchtung mit einem Beleuchtungswinkel der dazu führt, dass die vom Display ausgehenden Lichtkegel auf einen Punkt am oder im Auge, bspw. auf die Pupillenmitte oder den Augendrehpunkt, gerichtet sind, oder es erfolgt ein Ablenken der von dem Display ausgehenden Lichtkegel derart, dass sie in Richtung auf einen Punkt am oder im Auge, bspw. in Richtung auf die Pupillenmitte oder den Augendrehpunkt, abgelenkt werden.

Zum Generieren eines polychromatischen Bildes auf der Netzhaut umfasst die kohärentes Licht aussendende Lichtquellenanordnung wenigstens zwei, vorzugsweise wenigstens drei Lichtquellen mit unterschiedlichen Emissionswellenlängen oder eine in ihrer Emissionswellenlänge durchstimmbare Lichtquelle oder eine in mehreren Emissionswellenlängen gleichzeitig emittierende Lichtquelle, also eine multispektrale Lichtquelle wie etwa ein in mehreren Wellenlängen emittierender Laser oder eine Weißlichtquelle. Zum Einkoppeln kohärenten Lichtes mit mehreren Emissionswellenlängen kann das Brillenglas eine Einrichtung zum zeitsequentiellen Einkoppeln der einzelnen Emissionswellenlängen umfassen. Alternativ kann sie eine Einrichtung zum parallelen Einkoppeln der einzelnen Emissionswellenlängen umfassen. Beim parallelen Einkoppeln der einzelnen Emissionswellenlängen kann die Verformungseinrichtung zum Verformen der Wellenfront des kohärenten Lichtes wenigstens zwei, vorzugsweise wenigstens drei Verformungsschichten aufweisen, die jeweils eine Verformung der Wellenfront in unterschiedlichen Emissionswellenlängen herbeiführen, oder die Verformungseinrichtung ist in wenigstens zwei, vorzugsweise wenigstens drei Verformungssegmentgruppen unterteilt, wobei sich die Segmente einer Verformungssegmentgruppe von den Segmenten der jeweils anderen Verformungssegmentgruppen dadurch unterscheiden, dass sie eine Verformung der Wellenfront in den unterschiedlichen Emissionswellenlängen herbeiführen, und wobei die Segmente der Verformungssegmentgruppen im Wechsel lateral in der Verformungseinrichtung verteilt sind.

Wenn die Verformungseinrichtung zum Verformen der Wellenfront des kohärenten Lichtes derart ausgestaltet ist, dass die Verformung der Wellenfront vor der Modulation durch das Display erfolgt, kann die Verformungseinrichtung wenigstens eines der folgenden Elemente umfassen: eine Lage mit einem holografischen optischen Element (HOE), optional ein segmentiertes holografisches optisches Element, eine teiltransmissive Strahlteilerschicht, eine dichroitische Strahlteilerschicht, eine Lage mit einem teiltransparenten Fresnelspiegel, eine Gradientenindexschicht, kurz als GRIN bezeichnet.

Wenn die Verformungseinrichtung zum Verformen der Wellenfront des kohärenten Lichtes derart ausgestaltet ist, dass die Verformung der Wellenfront nach der Modulation durch das Display erfolgt, kann die Verformungseinrichtung wenigstens eines der folgenden Elemente umfassen: eine Lage mit einem holografischen optischen Film, optional mit einem segmentierten holografischen optischen Film, eine Lage mit Mikroprismen, eine Lage mit Fresnelstrukturen, eine Gradientenindexschicht.

Es besteht auch die Möglichkeit, dass die Pixel des Displays mit konvergenter oder divergenter Strahlung beleuchtet werden oder die Beleuchtungswinkel dynamisch umgeschaltet werden. In beiden Fällen spannt bereits die Beleuchtung einen Winkelbereich auf, der durch das Display zusätzlich modifiziert werden kann. Hierdurch können deutlich größere Lichtkegel generiert und somit auch die realisierbare Eyebox und das präsentierbare Feld vergrößert werden. Ein erfindungsgemäßes Brillenglas kann daher außerdem eine optische Anordnung zum Erzeugen eines divergenten oder eines konvergenten Strahlengangs umfassen. Eine derartige Anordnung kann insbesondere mit Sammel- und/oder Zerstreuungslinsen ausgestattet sein. Alternativ kann das Brillenglas eine optische Anordnung zum dynamischen Umschalten des Beleuchtungswinkels, unter dem das Display beleuchtet wird, umfassen.

Das erfindungsgemäße Brillenglas kann zudem eine Polarisationsanordnung zum Polarisieren des von der kohärenten Licht aussendenden Lichtquellenanordnung ausgehenden kohärenten Lichtes umfassen. Wie die Anordnung zur Erzeugung eines divergenten oder eines konvergenten Strahlengangs oder die Anordnung zum dynamischen Umschalten des Beleuchtungswinkels kann die Polarisationsanordnung Teil der Lichtquellenanordnung sein.

Eine erfindungsgemäße Datenbrille ist mit einem erfindungsgemäßen Brillenglas und, sofern die Lichtquellenanordnung nicht Teil des Brillenglases ist, mit einer Lichtquellenanordnung ausgestattet. Die mit der erfindungsgemäßen Datenbrille zu erzielenden Vorteile ergeben sich aus der Verwendung des erfindungsgemäßen Brillenglases. Auf die Ausführungen zum Brillenglas, die für die erfindungsgemäße Datenbrille entsprechend gelten, wird daher verwiesen.

Sofern die Datenbrille eine kohärentes Licht aussendende Lichtquellenanordnung umfasst, die nicht Teil des Brillenglases ist, kann die Lichtquellenanordnung eine Anordnung zum Erzeugen eines divergenten oder eines konvergenten Strahlengangs oder eine optische Anordnung zum dynamischen Umschalten des Beleuchtungswinkels umfassen. Ebenso kann die Datenbrille eine Polarisationsanordnung zum Polarisieren des von der kohärentes Licht aussenden Lichtquellenanordnung ausgehenden kohärenten Lichtes umfassen.

Zudem kann die Datenbrille eine kohärentes Licht aussendende Lichtquellenanordnung umfassen, die wenigstens zwei, vorzugsweise drei Lichtquellen mit unterschiedlichen Emissionswellenlängen oder eine in ihrer Emissionswellenlänge durchstimmbare Lichtquelle oder eine in mehreren Emissionswellenlängen gleichzeitig emittierende, das heißt multispektrale Lichtquelle wie etwa einen in mehreren Wellenlängen emittierenden Laser oder eine Weißlichtquelle umfassen.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt ein erstes Ausführungsbeispiel für ein erfindungsgemäßes Brillenglas in einer schematischen Darstellung.
- Figur 2: zeigt mit der Pixelgröße des Displays realisierbaren Winkelbereich, wobei der Winkelbereich in einem peripher liegenden Displayabschnitt dargestellt ist.
- Figur 3: zeigt den peripheren Abschnitt des Displays aus Figur 2 mit einer anderen Beleuchtungsrichtung.
- Figur 4: zeigt das Brillenglas aus den Figuren 2 und 3 mit einer an den jeweiligen Displayabschnitt abgepassten Beleuchtungsrichtung.
- Figur 5: zeigt das Brillenglas mit dem Displayabschnitt und der Beleuchtungsrichtung aus Figur 3 bei gedrehtem Auge.
- Figur 6: zeigt das Brillenglas mit dem Displayabschnitt und der Beleuchtungsrichtung aus Figur 3 mit einem lateral verschobenen Auge.
- Figur 7: zeigt ein Brillenglas, in dem die den einzelnen Displayabschnitten zugeordnete Informationen mehrfach dargestellt werden.
- Figur 8: zeigt ein zweites Ausführungsbeispiel für ein erfindungsgemäßes Brillenglas, in dem das Display an der vom Auge abgewandten Seite des Brillenglases und die Verformungseinrichtung an der dem Auge zugewandten Seite des Brillenglases angeordnet sind.
- Figur 9: zeigt eine Variante des Brillenglases mit einer optischen Komponente zum Erzeugen eines divergenten Strahlengangs und einem Polarisator.
- Figur 10: zeigt eine Variante des Brillenglases mit am Brillenglas angeordneten Laserdioden und einer dreischichtigen Verfomrungseinrichtung.
- Figur 11: zeigt eine Variante des Brillenglases mit drei Laserdioden und einer Verformungseinrichtung, die aus drei lateral zueinander versetzten Elementen aufgebaut ist.
- Figur 12: zeigt eine Variante der Brille mit einem in das Brillenglas eingebetteten Display.
- Figur 13: zeigt eine erfindungsgemäße Datenbrille in einer schematischen Darstellung.

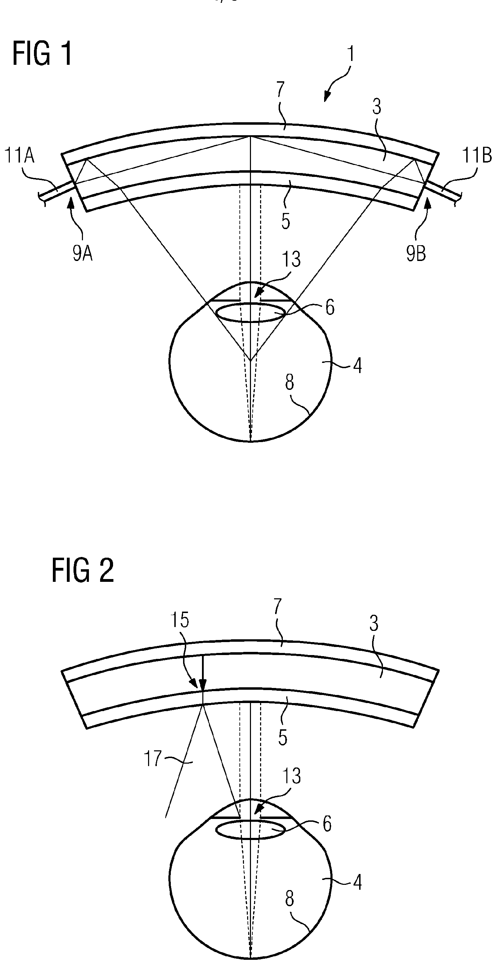

Ein erstes Ausführungsbeispiel für ein erfindungsgemäßes Brillenglas, welches in einer erfindungsgemäßen Datenbrille Verwendung finden kann, und Abwandlungen dieses Ausführungsbeispiels wird nachfolgend mit Bezug auf die Figuren 1 bis 7 beschrieben. Figur 1 zeigt dabei in einer schematischen Darstellung den Aufbau des Brillenglases zusammen mit dem Auge eines Nutzers einer erfindungsgemäßen mit dem Brillenglas ausgestatteten Datenbrille.

Das Brillenglas 1 umfasst einen Brillenglasgrundkörper 3, der aus einem mineralischen oder einem organischen Glas hergestellt sein kann. Auf der dem Auge zugewandten Innenfläche des Grundkörpers 3 ist ein Display 5 angeordnet, mit dem die komplexe Amplitudenverteilung der Wellenfront von das Display 5 beleuchtendem kohärenten Beleuchtungslicht moduliert werden kann. An der vom Auge 4 abgewandten Außenfläche des Grundkörpers 3 befindet sich eine Verformungseinrichtung 7, mit der die Wellenfront des kohärenten Lichtes, mit dem das Display 5 beleuchtet wird, verformt werden kann.

An den seitlichen Rändern des Grundkörpers 3 befinden sich Bereiche 9A, 9B zum Einkoppeln von kohärentem Licht in den Grundkörper 3. Im vorliegenden Ausführungsbeispiel wird das kohärente Licht von den Ausgangsenden von Lichtleitfasern 11 A; 11B bereitgestellt, die derart angeordnet sind, dass das von ihnen abgestrahlte Licht in Richtung auf die Verformungseinrichtung 7 abgestrahlt wird. Dabei dient die Lichtleitfaser 11 A im in Figur 1 links dargestellten Einkopplungsbereich 9A im Wesentlichen zum Beleuchten der linken Hälfte der Verformungseinrichtung 7 und die Lichtleitfaser 11B im in Figur 1 rechts dargestellten Einkopplungsbereich 9B im Wesentlichen zum Beleuchten der rechten Seite der Verformungseinrichtung 7.

Von der Verformungseinrichtung 7 wird das kohärente Licht im vorliegenden Ausführungsbeispiel unter Verformung der Wellenfront in Richtung auf das Display 5 reflektiert. Auf dem Display 5 wird ein Muster dargestellt, das die Phase und/oder die Amplitude der auf das Display einfallenden Wellenfront derart moduliert, dass unmittelbar hinter dem Display eine Wellenfront vorliegt, die sich näherungsweise durch die Fouriertransformierte eines auf der Netzhaut 8 darzustellenden Bildes beschreiben lässt. Das Brillenglas wird mittels der erfindungsgemäßen Datenbrille dann derart vor dem Auge 4 angeordnet, dass sich das Display 5 in einem Abstand von der Augenlinse 6 befindet, der einer mit der Augenlinse 6 adaptierbaren Brennweite entspricht. Dadurch befindet sich die Wellenfront in einer Brennebene der Linse, was dazu führt, dass die Linse näherungsweise als Fouriertransformator dient, was wiederum dazu führt, dass das auf die Netzhaut 8 gelangende Strahlenbündel durch Interferenzen auf der Netzhaut 8 eine Intensitätsverteilung generiert, die dem darzustellenden Bild entspricht.

Da mit den heute gängigen Pixelgrößen von transparenten oder teiltransparenten Displays lediglich Ablenkungen der Wellenfront in der Größe von ca. +/- 3° möglich sind, wäre das mit dem Display 5 alleine maximal erreichbare Sichtfeld sehr klein. Zur Vergrößerung des Sichtfelds dient die Verformungseinrichtung 7, mit der eine Verkippung der beleuchtenden Wellenfront herbeigeführt werden kann. Der Grad der Verkippung hängt dabei von der lokalen Flächenform der Verformungseirichtung und vom Ort des Auftreffens der Wellenfront auf die Verformungseinrichtung ab, so dass eine an den Auftreffpunkt der Wellenfront auf das Display angepasste Verkippungsverteilung realisiert werden kann. Eine solche Verkippungsverteilung ist geeignet, den darstellbaren Bildwinkel zu vergrößern, wie nachfolgend noch beschrieben werden wird.

Bisher wurde lediglich auf den prinzipiellen Aufbau und das Funktionsprinzip des ersten Ausführungsbeispiels für das erfindungsgemäße Brillenglas 1 eingegangen. Nachfolgend werden mögliche Ausgestaltungen der einzelnen Komponenten beschrieben.

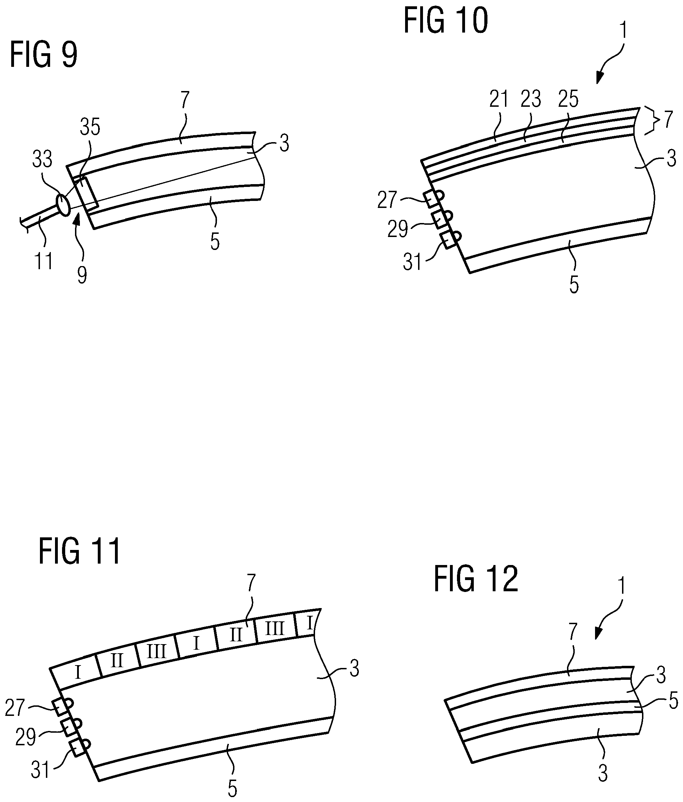

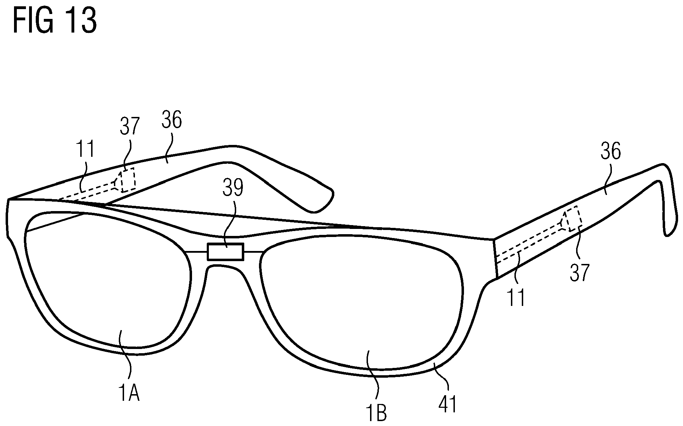

Im Brillenglas 1 des ersten Ausführungsbeispiels wird ebenso wie bei den Brillengläsern der nachfolgend zu beschreibenden Ausführungsbeispiele kohärentes Licht bzw. partiell kohärentes Licht zum Bestrahlen des Displays 5 benutzt. Unter dem Begriff Kohärenz wird hierbei sowohl die mit der spektralen Bandbreite der Strahlung zusammenhängende zeitliche Kohärenz als auch die räumliche Kohärenz bei Emission eines flächigen Strahlers zusammengefasst. Auch eine breitbandige Lichtquelle wie etwa eine Weißlichtquelle hat eine gewisse Kohärenzlänge, d.h. eine gewisse räumliche Kohärenz und wird daher im Folgenden als partiell kohärente Lichtquelle betrachtet. Generell ist die räumliche Kohärenz einer typischen Weißlichtquelle gering, weil eine Vielzahl von Emissionen an räumlich getrennten Stellen der Lichtquelle stattfindet und die einzelnen Emissionsprozesse unabhängig voneinander stattfinden. Mit Hilfe einer Lochblende kann jedoch erreicht werden, dass jenseits der Lochblende die räumliche Kohärenz erhöht ist. Je geringer der Durchmesser des Loches der Lochblende ist, desto größer ist die räumliche Kohärenz jenseits der Lochblende. Jedoch verringert sich auch die Intensität des Beleuchtungslichtes. Die zeitliche Kohärenz einer Weißlichtquelle wird im Wesentlichen durch die Wellenlängenverteilung des emittierten Lichtes bestimmt. Licht, das von der Lichtquelle mit derselben Wellenlänge emittiert wird, weist zeitliche Kohärenz auf. Diese wird jedoch durch die Überlagerung mit Licht anderer Wellenlängen gestört. Durch die Verwendung eines Schmalbandfilters kann die Störung durch andere Wellenlängen reduziert - und damit die zeitliche Kohärenz erhöht werden. Auch hiermit geht jedoch eine Verringerung der Intensität einher. Im Rahmen des Ausführungsbeispiels ist es daher vorteilhaft, eine Laserdiode oder ein Laser, die konzeptbedingt zeitlich und räumlich hinreichend kohärentes Licht emittieren, zu verwenden. Obwohl bspw. eine Laserdiode grundsätzlich am Rand des Brillenglases 1 angeordnet sein könnte, befindet sich die Lichtquelle 37, im vorliegenden Ausführungsbeispiel also der Laser oder die Laserdiode, im Brillengestell (vergl. Fig. 13), und das von dem Laser oder der Laserdiode 37 emittierte Licht wird mittels einer Lichtleitfaser 11 zu dem Einkopplungsbereich 9 des Grundkörpers 3 des Brillenglases 1 geführt. Dies bietet den Vorteil, dass mit einer einzigen Lichtquelle 37 eine Einkopplung an mehreren Stellen des Einkopplungsbereichs 9 erfolgen kann, indem mehrere Lichtleitfasern zu unterschiedlichen Abschnitten der Einkopplungsbereiche geführt werden. Die Aufteilung der von der Lichtquelle emittierten kohärenten Strahlung auf mehrere Fasern kann zum Beispiel über einen 1-zu-N-Faserkoppler erfolgen. Es besteht aber auch die Möglichkeit, beispielsweise mehrere am Rand des Brillenglases 1 befestigte Laserdioden oder andere Quellen kohärenter Strahlung zu verwenden. Andere Quellen kohärenter Strahlung wären zum Beispiel Vertical Cavity Surface Emitting Lasers (VCSEL). Außerdem besteht auch die Möglichkeit, Lichtleitstrukturen in den Grundkörper 3 einzubetten und gegebenenfalls Hilfsoptiken für die Einkopplung zu verwenden, auch wenn die direkte Einkopplung ohne Hilfsoptiken grundsätzlich möglich ist. Als Hilfsoptiken kommen bspw. refraktive Elemente wie beispielsweise Linsen oder Fresnelstrukturen sowie Strukturen mit variierendem Brechungsindex (sogenannte GRIN-Strukturen), etc. in Frage. Bei allen beschriebenen Varianten von Lichtquellen und der Art der Einkopplung ist lediglich zu beachten, dass das Display 5 hinreichend ausgeleuchtet ist. Das Vorhandensein von Hilfsoptiken um Einkoppeln der Beleuchtungsstrahlung in den Grundkörper 3 ist in Figur 9 schematisch dargestellt. Die Hilfsoptik ist dabei als vor dem Ausgangsende der Lichtleitfaser 11 angeordnete Linse 33 symbolisiert. Figur 9 zeigt stark schematisiert auch das Anordnen eines polarisationsoptischen Bauelements als Polarisationsanordnung Im vorliegenden Ausführungsbeispiel ist das polarisationsoptische Bauelement ein Polarisator 35 im Einkopplungsbereich 9 des Grundkörpers 3. Statt des Polarisators oder in Kombination mit dem Polarisator können auch andere polarisationsoptische Bauelemente Verwendung finden, bspw. Lambda/2-Plättchen.

Wenn die Verformungseinrichtung 7 und das Display 5 nur in einem bestimmten Bereich des Brillenglases 1 vorhanden sind, besteht auch die Möglichkeit, das kohärente Licht mittels Lichtleitstrukturen in denjenigen Bereich zu leiten, in dem die Verformungseinrichtung 7 und das Display 5 vorhanden sind. Das Leiten kann dabei beispielsweise über Totalreflexion an der äußeren und der inneren Fläche des Grundkörpers oder durch reflektive Schichten an der Außenfläche und der Innenfläche des Grundkörpers 3 erfolgen. Dabei ist jedoch zu beachten, dass etwaige für die Lichtleitung oder die Strahlformung eingebrachte Hilfsmittel den Blick durch das Brillenglas 1 nicht oder zumindest nicht wesentlich beeinflussen.

Eine weitere mögliche Lichtquelle, die im erfindungsgemäßen Brillenglas Verwendung finden kann, ist ein transparentes oder teiltransparentes Phaselocked Array von Laserquellen, beispielsweise von VCSELs. Dieses Array von Laserquellen kann direkt hinter dem Display 5 angebracht werden. Wenn die einzelnen Laserquellen des Arrays modulierbar sind, kann das Phaselocked Array von Laserquellen neben der Lichtquellenfunktion auch die Displayfunktion übernehmen, so dass Lichtquelle und Display 5 eine Einheit bilden. Für die Transparenz des Arrays von Laserquellen genügt es, wenn kleine, nicht transparente Laserquellen von transparenten Bereichen umgeben sind. Hierbei wird davon ausgegangen, dass das Brillenglas 1 relativ nahe an der Augenpupille 13 sitzt und ein durch das Brillenglas 1 beobachteter Objektpunkt wahrgenommen werden kann, wenn die nichttransparente Laserquelle das vom Objektpunkt ausgehende und auf die Pupille 13 treffende Lichtbündel nicht vollständig abschattet. Diese Bedingung ist erfüllt, wenn die laterale Ausdehnung der nicht transparenten Laserquelle kleiner als der Pupillendurchmesser ist. Dies ist typischerweise der Fall, wenn die Ausdehnung der Laserquelle nicht mehr als ca. 0,5 mm, vorzugsweise nicht mehr als 0,1 mm beträgt.

Eine wichtige Voraussetzung für die kohärente Bildgebung stellt die Interferierbarkeit der Teilwellen dar. Diese ist eng mit der Polarisation der auf das Display auftreffenden Strahlung verbunden. Die Polarisation sollte daher bereits bei der Auslegung des Systems berücksichtigt werden. In einer bevorzugten Ausführungsvariante der Erfindung wird das gesamte Display mit kohärenter Strahlung der gleichen Polarisationsrichtung beleuchtet. Bei der Lichtleitung mit Hilfe von Fasern können beispielsweise polarisationserhaltende Fasern Verwendung finden.

Wenn mit dem erfindungsgemäßen Brillenglas 1 polychromatische, also mehrfarbige Bildinhalte dargestellt werden sollen, können mehrere Lichtquellen Verwendung finden, die in unterschiedlichen Wellenlängen emittieren. Daneben ist es aber auch möglich, durchstimmbare Lichtquellen oder multispektrale Lichtquellen wie etwa ein Laser, der mehrere Wellenlängen gleichzeitig verstärkt, zu verwenden. Möglich sind sowohl die zeitlich parallele Bereitstellung aller Wellenlängen als auch das zeitsequentielle Durchschalten der einzelnen Wellenlängen. Bei der parallelen Bereitstellung aller Wellenlängen ist es jedoch notwendig, die mit dem Display darzustellende Bildinformation so zu optimieren, dass alle Wellenlängen gleichzeitig durch Interferenz auf der Netzhaut 8 die gewünschte Bildinformation darstellen. Einfacher zu realisieren ist daher die zeitsequentielle Variation der Beleuchtungswellenlänge in Kombination mit einer synchronisierten Umschaltung der durch das Display 5 bereitgestellten Wellenfront. Zudem können bei der zeitsequentiellen Variation der Beleuchtungswellenlänge die Wellenfronten für die jeweilige Wellenlänge optimiert werden.

Auf dem Display 5 wird eine Pixelverteilung dargestellt, durch die die auf das Display 5 auftreffende Wellenfront so moduliert wird, dass unmittelbar hinter dem Display 5 eine Wellenfront entsteht, deren komplexe Amplitudenverteilung durch Rückwärtspropagation der Wellenfront am Ort des Netzhaut 8 ermittelt werden kann und die im vorliegenden Ausführungsbeispiel durch die Fouriertransformation des auf der Netzhaut 8 darzustellenden Bildes angenähert werden kann. Durch Interferenz der einzelnen Bestandteile der Wellenfront auf der Netzhaut 8 entsteht dort eine Intensitätsverteilung, die dem darzustellenden Bild entspricht. Wie bereits erwähnt, braucht das Display 5 bei dieser Art der Bilderzeugung nicht in einer zur Netzhaut 8 optisch konjugierten Ebene angeordnet zu werden. Das Bild entsteht durch destruktive und konstruktive Überlagerungen der von den einzelnen Pixel des Displays 5 ausgehenden Teilwellen. Um die gewünschte Intensitätsverteilung auf der Netzhaut 8 zu generieren, muss die vom Display 5 ausgehende Wellenfront eine passende komplexe Amplitude (Intensitäts- und Phasenverteilung) aufweisen. Diese komplexe Amplitude, die unmittelbar hinter dem Display vorliegt, ergibt sich aus der auf das Display 5 einfallenden Eingangswellenfront durch Multiplikation mit der Wellenfrontmodifikation durch das Display 5, das heißt durch die pixellierte Amplituden- und/oder Phasenmodifikation. Während der Propagation der modifizierten Wellenfront vom Display 5 zur Netzhaut 8 wird sie von den dazwischenliegenden optischen Schichten und Elementen wie etwa der Innenfläche des Brillenglases, der Hornhaut, der Augenlinse 6 und dem Glaskörper des Auges 4 beeinflusst. Das auf der Netzhaut 8 entstehende Intensitätsmuster kann mit Hilfe wellenoptischer Propagationsansätze wie etwa dem Kirchhoffschen Beugungsintegral, dem Huygens-Fresnel-Prinzip, etc. bestimmt werden. Neben den Beugungsintegralen, die die Vorwärtspropagation vom Display 5 zur Netzhaut 8 beschreiben, können auch inverse Beugungsintegrale aufgestellt werden, die es ermöglichen, aus einer vorgegebenen Intensitätsverteilung auf der Netzhaut 8 die dafür nötige komplexe Amplitude unmittelbar hinter dem Display 5 zu berechnen. Diese Beugungsintegrale können entweder direkt oder, wie dies häufig der Fall ist, nur in Näherung wie etwa in der Fresnelnäherung, oder iterativ wie etwa mittels iterativer Fouriertransformationsalgorithmen, gelöst werden. Nutzerspezifische Fehlsichtigkeiten und entsprechende Korrekturflächen am Brillenglas können im Beugungsintegral berücksichtigt werden, so dass das auf dem Display 5 dargestellte Muster zum Beeinflussen der Wellenfront die Fehlsichtigkeiten bereits berücksichtigt. Eine mit dem erfindungsgemäßen Brillenglas 1 ausgestattete Datenbrille kann daher auf digitalem Wege an Fehlsichtigkeiten und individuelle Tragbedürfnisse eines Nutzers, etwa die Lage der Eyebox, den Augendurchmesser, etc. angepasst werden.

Vorteilhaft ist es, wenn das Display 5 an die Krümmung des Brillenglases 1 angepasst ist und sowohl die Intensität als auch die Phase der Beleuchtungswellenfront modifizieren kann, obwohl es grundsätzlich auch ausreichend ist, wenn lediglich die Intensität oder die Phase der Beleuchtungswellenfront modifiziert werden kann. Neben der Möglichkeit, ein an die Krümmung des Brillenglases 1 angepasstes Display zu verwenden, besteht auch die Möglichkeit, ein planares Display zu verwenden.

Das Display 5 kann wie in dem in Figur 1 dargestellten Ausführungsbeispiel auf der Innenseite des Grundkörpers 3 angeordnet sein. Es besteht aber auch die Möglichkeit, das Display 5 in den Grundkörper 3 einzubetten, wie dies in Figur 12 dargestellt ist. Ansonsten unterscheidet sich das in Figur 12 dargestellte Brillenglas nicht von dem in Figur 1 dargestellten Brillenglas 1.

Das Display 5 kann dabei entweder zusammen mit der zugehörigen Elektronik ins Brillenglas 1 integriert oder nachträglich mit dem Brillenglas kombiniert und zum Beispiel verklebt werden.

Wie bereits erwähnt kann die Intensitätsverteilung auf der Netzhaut 8 sowohl durch ein Display 5 mit reiner Intensitätsmodulation als auch durch ein Display 5 mit reiner Phasenmodulation bereitgestellt werden. Beide Arten von Displays sind auf dem Markt erhältlich, beispielsweise in Form von Flüssigkristalldisplays (LCD, Liquid Crystal Display) oder in Form von Flüssigkristallen auf einem Siliziumsubstrat (LCoS, Liquid Crystal on Silicone). Die größten Freiheitsgrade bei der Generierung der Intensitätsverteilung auf der Netzhaut 8 ergeben sich jedoch durch ein Display, das sowohl die Phase als auch die Amplitude der einfallenden kohärenten Wellenfront modifiziert. Ein solches Display könnte zum Beispiel als mehrschichtiges Display aufgebaut sein, bei dem eine oder mehrere Schichten die Phase und eine oder mehrere Schichten die Intensität der einfallenden Wellenfront beeinflussen. Ein derartiges Display ist beispielsweise WO 02/091061 A1 beschrieben.

Das erfindungsgemäße Brillenglas erfordert ein transparentes oder teiltransparentes Display 5. Dieses lässt sich auf zwei Arten implementieren. Einerseits können für die Elektronik, die Kontaktierung und die optisch wirksamen Komponenten transparente Materialien Verwendung finden. Andererseits besteht die Möglichkeit, die amplituden- und/oder phasenmodulierenden Strukturen aus nicht transparenten Materialien aufzubauen und die nicht transparenten Bereiche durch transparente Zonen/Stege miteinander zu verbinden. Bei einer Pixelgröße von beispielsweise 5 × 5 µm² erfasst das Auge bei jeder Pupillenposition automatisch eine Vielzahl von transparenten und intransparenten Bereichen. Der Grad der Transparenz ergibt sich dabei aus dem Verhältnis zwischen transparenten und intransparenten Bereichen. Der Grad der Transparenz korreliert mit dem Füllfaktor des Displays und hat damit einen Einfluss auf dessen Effizienz.

Die Intensitätsverteilung an einer bestimmten Stelle der Netzhaut 8 ergibt sich wie beschrieben durch die Interferenz derjenigen vom Display 5 ausgehenden Teilwellen, welche durch die Augenpupille 13 hindurchtreten. Die Pixel des Displays 5 stellen eine beugende Struktur dar, die die einfallende Wellenfront aus kohärentem Licht modifiziert und ablenkt. Der maximale Ablenkwinkel für die einfallende Wellenfront hängt dabei von der Pixelgröße des Displays 5 ab. Wenn beispielsweise eine Beleuchtungslichtquelle mit einer Emissionswellenlänge von λ = 532 nm Verwendung findet, das Beleuchtungslicht in Form einer ebenen Wellenfront parallel zur Flächennormalen des Displays 5 auf dieses auftrifft und auf dem Display 5 ein Strichgitter mit einer Periode p dargestellt wird, fungiert dieses Strichgitter als Beugungsgitter mit der Periode p. Der Winkel des ersten Maximums ergibt sich dann aus der Gleichung sinβ = m · λ/p, mit m = 1. Bei einer Pixelgröße von 5 µm ergibt sich eine Periode von p = 10 µm. Bei der Beleuchtungswellenlänge von λ = 532 nm ergibt sich daraus für den Winkel des ersten Beugungsmaximums β = 3,05°. Ohne weitere Maßnahmen ist bei einer Pixelgröße von 5 µm daher lediglich ein Sichtfeld von ca. +/- 3° zu realisieren. Wenn unter den gleichen Voraussetzungen bezüglich der Emissionswellenlänge und der Einfallsrichtung auf das Display 5 ein Sehfeld von +/- 30° realisiert werden soll, wäre hierfür eine Periode von 1,064 µm und damit eine Pixelgröße von 0,532 µm notwendig. Derartig kleine Pixel können mit der heutigen Technologie nicht hergestellt werden.

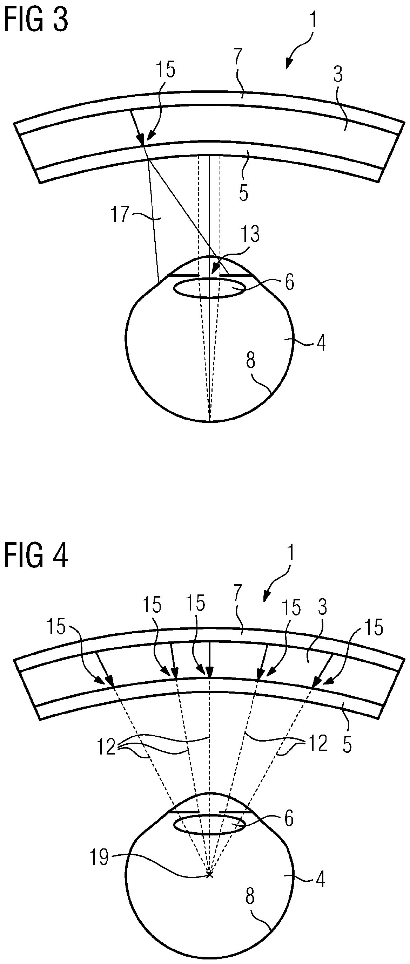

Aufgrund der kleinen mittels des Displays 5 realisierbaren Ablenkungen der Wellenfront besteht die Gefahr, dass nicht die gesamte Bildinformation die Netzhaut 8 erreicht und daher die auf der Netzhaut 8 dargestellte Bildinformation unvollständig ist. Grund hierfür ist, dass von manchen Subregionen des Displays 5 aufgespannte Lichtkegel 17 die Pupille 13 des Auges 4 verfehlen können, wie dies in Figur 2 dargestellt ist. Die Figur zeigt für eine Subregion 15 des Displays 5 den von dieser Subregion 15 ausgehenden Lichtkegel 17 der modulierten Wellenfront. Wie aus Figur 2 zu erkennen ist, verfehlt der von der Subregion 15 ausgehende Lichtkegel 17 vollständig die Pupille 13 des Auges 4. Die auf dem Subbereich 15 des Displays 5 dargestellte Information erreicht daher nicht die Netzhaut 8 des Auges 4 und kann somit nichts zu der das darzustellende Bild repräsentierenden Intensitätsverteilung auf der Netzhaut 8 beitragen. Um zu ermöglichen, dass auch die Subregion 15 bzw. die aus dieser Subregion hervorgehenden Subwellenfronten die Netzhaut 8 erreichen, wird die auf das Display 5 auftreffende Wellenfront mittels der Verformungseinrichtung 7 so verformt, dass der auf die Subregion 15 des Displays 5 einfallende Teil der Wellenfront des Beleuchtungslichtes einen derartigen Winkel mit der lokalen Flächennormalen des Displays 5 im Bereich der Subregion 15 einschließt, dass der von der Subregion 15 des Displays ausgehende Öffnungskegel auf die Pupille 13 gerichtet ist, wie dies in Figur 3 dargestellt ist.

In Figur 3 erfolgt die Verformung der Beleuchtungswellenfront durch die Verformungseinrichtung 7 derart, dass das Lot des Lichtkegel 17, das im Wesentlichen der Einfallsrichtung der Wellenfront des Beleuchtungslichtes auf das Display 5 entspricht, in Richtung auf die Pupille 13 weist. Bei Annahme einer starren Augenposition bietet es sich daher an, mittels der Verformungseinrichtung die Wellenfront des Beleuchtungslichtes derart zu verformen, dass in jeder Subregion der Auftreffwinkel der Wellenfront bezogen auf die lokale Flächennormale einen derartigen Wert aufweist, dass das Lot des vom Display 5 ausgehenden Lichtkegels 17 für jede Subregion 15 auf die Pupille 13 des Auges 4 weist. Wird dagegen statt von einem starren Auge von einem Auge ausgegangen, das eine Drehbewegung ausführen kann, ist es vorteilhaft, wenn die Wellenfront des Beleuchtungslichtes von der Verformungseinrichtung derart verformt wird, dass sich die Lote 12 der von den Subregionen 15 des Displays 5 ausgehenden Lichtkegel 17 im Inneren des Auges, insbesondere im Augendrehpunkt 19 schneiden, wie dies in Figur 4 dargestellt ist. In einer speziellen Ausgestaltung dieser Variante können konzentrische Brillengläser Verwendung finden, bei denen der Krümmungsmittelpunkt mit dem Augendrehpunkt 19 des Auges zusammenfällt. Statt im Augendrehpunkt 19 können sich die Lote 12 der von den Subregionen 15 des Displays 5 ausgehenden Lichtkegel 17 auch in einem anderen im Inneren des Auges gelegenen Punkt schneiden, bspw. in einem zwischen dem Augendrehpunkt und der Pupillenmitte gelegenen Punkt.

Als Verformungseinrichtung 7 kommt im vorliegenden Ausführungsbeispiel ein segmentiertes holografisches optisches Element (HOE) zur Anwendung. Dieses kann insbesondere als schmalbandiges, in Reflexion arbeitendes Volumen-HOE gefertigt sein. In diesem Fall besitzt es die besondere Eigenschaft, dass es die ins Glas eingekoppelte Beleuchtungsstrahlung fast vollständig reflektiert, während der größte Teil des visuellen Spektrums das holografische optische Element fast unbeeinflusst passieren kann, so dass die Wahrnehmung der Umgebung so gut wie nicht beeinflusst ist. Damit handelt es sich beim holografischen optischen Element um einen effizienten, wellenlängenselektiven Strahlteiler, der speziell auf die Beleuchtungswellenlänge optimiert werden kann. Im Falle einer polychromatischen Beleuchtung mit mehreren schmalbandigen Wellenlängenbereichen kann die Verformungseinrichtung 7 mehrere Lagen aus holografischen optischen Elementen 21, 23, 25 aufweisen, von denen jede auf eine Beleuchtungswellenlänge optimiert ist. Dies ist schematisch in Figur 10 dargestellt. Alternativ besteht auch die Möglichkeit, mehrere Sub-HOEs nebeneinander anzuordnen, wie dies beispielhaft in Figur 11 für drei Sub-HOEs I, II und III dargestellt ist. Es sei an dieser Stelle angemerkt, dass in den Figuren 10 und 11 in Abweichung zur Figur 1 drei in unterschiedlichen Wellenlängen emittierende Laserdioden 27, 29, 31 direkt am Grundkörper 3 des Brillenglases 1 angeordnet sind. Es besteht aber auch die Möglichkeit, drei Lichtleitfasern 11 oder ein Vielfaches davon vorzusehen, wobei die Lichtleitfasern Beleuchtungslicht in drei unterschiedlichen Wellenlängen in den Grundkörper 3 abgeben. Das Beleuchtungslicht in drei unterschiedlichen Wellenlängen kann alternativ aber auch über eine einzige Lichtleitfaser übertragen werden. Das durch die Lichtleitfasern geleitete Licht kann dabei entweder von in unterschiedlichen Wellenlängen emittierenden Lichtquellen stammen oder von einer durchstimmbaren Lichtquelle. Das Licht mit den unterschiedlichen Wellenlängen kann dabei entweder parallel oder zeitsequentiell in das Brillenglas 1 eingekoppelt werden.

Alternativ zu einem oder mehreren HOEs kann auch eine klassische, teiltransmissive Strahlteilerschicht, eine oder mehrere dichroitische Strahlteilerschichten, ein teiltransmissiver Fresnelspiegel oder andere Strahlteilerprinzipien zum Einsatz kommen. Auch spezielle Mehrfachauskopplungsprinzipien, wie sie zum Beispiel in der US 8,320,032 B2 beschrieben sind, können für die Beleuchtung des Displays Verwendung finden.

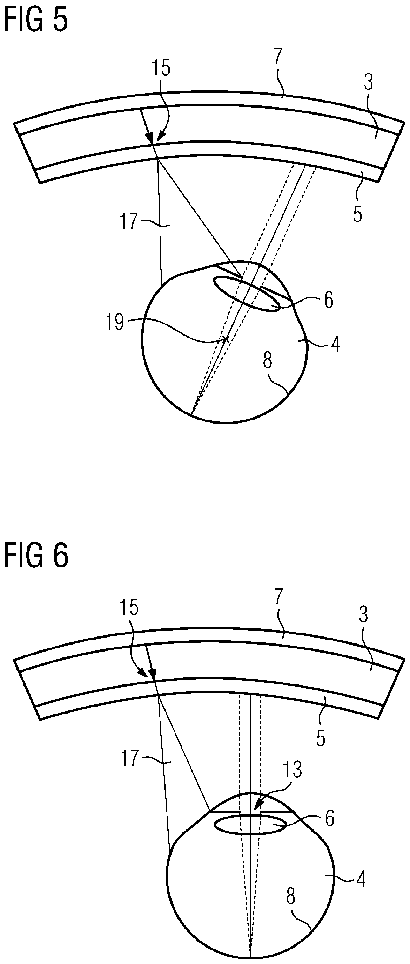

Wenn dem Träger einer Datenbrille ein Bild dargeboten wird, besteht eine hohe Wahrscheinlichkeit dafür, dass er das Auge automatisch in Richtung des betrachteten Bildinhalts dreht, um den relevanten Bildinhalt mit der Fovea centralis, der Stelle des schärfsten Sehens, wahrzunehmen. Dabei besteht das Risiko, dass Bildinformationen von weit entfernten Subregionen des Displays nicht mehr wahrgenommen werden können, weil durch die Drehung des Auges der Lichtkegel 17 der von diesen Subregionen ausgehenden Wellenfront nicht mehr in die Pupille 13 gelangt. Dieses Problem und die Lösung hierzu wird nachfolgend unter Bezugnahme auf die Figuren 5 bis 7 beschrieben. Figur 5 zeigt die Situation aus Figur 3, wenn das Auge um den Augendrehpunkt 19 gedreht ist. Obwohl der Lichtkegel 17 17 bei starr geradeaus schauendem Auge in die Augenpupille 13 gelangen würde, verfehlt dieser die Pupille, wenn das Auge 4 gedreht ist, wie dies in Figur 5 schematisch verdeutlicht ist. Die Folge ist, dass der Träger nur einen Ausschnitt des Feldes sieht und daher das Gesamtfeld nur durch eine mit dem Auge 4 durchgeführte Scanbewegung erfassen kann. Die gleiche Problematik kann auftreten, wenn das Auge relativ zum Brillenglas 1 aus der optimalen Lage lateral verschoben ist, wie in Figur 6 schematisch gezeigt ist. Auch hier verfehlt der von der Subregion 15 ausgehende Lichtkegel 17 die Pupille 13 des Auges 4. Eine solche Verschiebung kann bspw. auftreten, wenn standardisierte Datenbrillen Verwendung finden, die nicht an die Geometrie des Kopfes des Nutzers und der Lage der Augen angepasst sind.

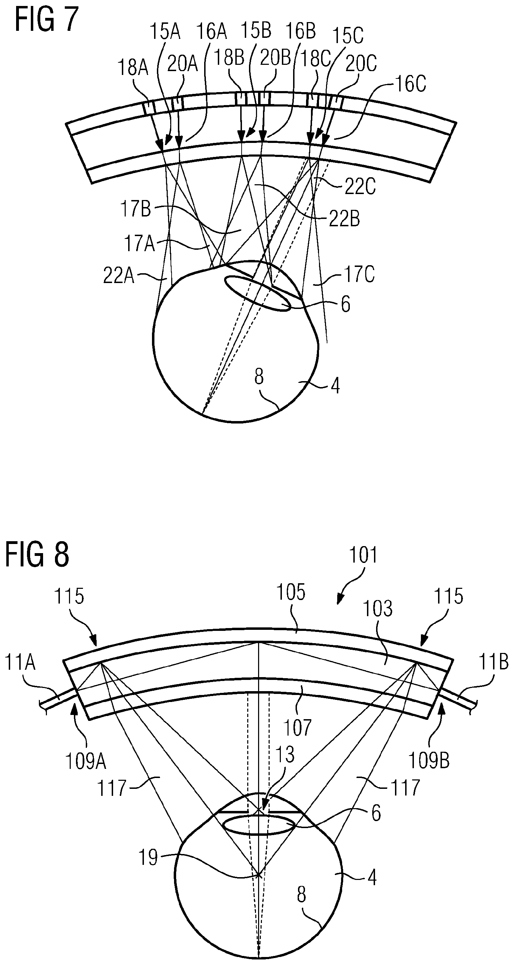

Um auch bei einer Drehbewegung des Auges und/oder einem lateralen Versatz des Auges gegenüber dem Brillenglas 1 die Wahrnehmung des Gesamtfeldes zu ermöglichen, kann eine Segmentierung des Displays und der zugehörigen Beleuchtung erfolgen, wie dies in Figur 7 schematisch dargestellt ist. Das Display 5 weist dann gemäß dem vorliegenden Ausführungsbeispiel der Erfindung Gruppen 15, 16 von Display-Subregionen 15A, 15B, 15C, 16A, 16B, 16C auf, wobei sich die Display-Subregionen 15A, 15B, 15C, 16A, 16B, 16C der einzelnen Gruppen 15, 16 auf dem Display 5 abwechseln. Jede Gruppe 15, 16 von Display-Subregionen 15A, 15B, 15C, 16A, 16B, 16C generiert dabei im Wesentlichen dasselbe Bild. Außerdem weist die Verformungseinrichtung 7 Gruppen 18, 20 von Verformungseinrichtung-Subregionen 18A, 18B, 18C, 20A, 20B, 20C auf, wobei jede der Gruppen 18, 20 von Verformungseinrichtung-Subregionen 18A, 18B, 18C, 20A, 20B, 20C einer Gruppe 15, 16 von Display-Subregionen 15A, 15B, 15C, 16A, 16B, 16C zugeordnet ist. Die einer Gruppe 15, 16 von Display-Subregionen 15A, 15B, 15C, 16A, 16B, 16C zugeordnete Gruppe 18, 20 von Verformungseinrichtung-Subregionen 18A, 18B, 18C, 20A, 20B, 20C weist dabei ebenso viele Verformungseinrichtung-Subregionen 18A, 18B, 18C, 20A, 20B, 20C auf wie die Gruppe 15, 16 von Display-Subregionen 15A, 15B, 15C, 16A, 16B, 16C, der sie zugeordnet ist, Display-Subregionen 15A, 15B, 15C, 16A, 16B, 16C aufweist. Die verschiedenen Gruppen 18, 20 von Verformungseinrichtung-Subregionen 18A, 18B, 18C, 20A, 20B, 20C verformen die Wellenfront derart unterschiedlich, dass die Lichtkegel 17A, 22A, 17B, 22B, 17C, 22C von dieselbe Bildinformation darstellenden benachbarten Display-Subregionen 15A, 16A, 15B, 16B, 15C, 16C unterschiedlicher Gruppen 15, 16 von Display-Subregionen 15A, 15B, 15C, 16A, 16B, 16C, auf unterschiedliche Punkte im Raum gerichtet sind. Figur 7 zeigt beispielhaft für zwei Gruppen 15, 16 von Display-Subregionen 15A, 15B, 15C, 16A, 16B, 16C und zwei Gruppen 18, 20 von Verformungseinrichtung-Subregionen 18A, 18B, 18C, 20A, 20B, 20C die Beleuchtungsrichtungen der Display-Subregionen 15A, 15B, 15C, 16A, 16B, 16C und die Richtungen der von den Display-Subregionen 15A, 15B, 15C, 16A, 16B, 16C ausgehenden Lichtkegel 17A, 17B, 17C, 22A, 22B, 22C. Dabei weisen die Richtungen, in die die Lichtkegel 22A, 22B, 22C der zweiten Gruppe 16 von der Display-Subregionen 16A, 16B, 15C abgestrahlt werden, einen Winkel zu den Richtungen auf, in die die Lichtkegel 17A, 17B, 17C der ersten Gruppe 15 von der Display-Subregionen 15A, 15B, 15C abgestrahlt werden. In der in Figur 7 dargestellten Ausführungsvariante der Erfindung verformen die Verformungseinrichtung-Subregionen 18A, 18B, 18C, 20A, 20B, 20C einer Gruppen 18, 20 von Verformungseinrichtung-Subregionen 18A, 18B, 18C, 20A, 20B, 20C die Wellenfront demnach derart, dass sie auf den Display-Subregion 15A, 15B, 15C, 16A, 16B, 16C der zugeordneten Gruppe 15, 16 von Display-Subregionen 15A, 15B, 15C, 16A, 16B, 16C mit einem Winkel auftrifft, der dazu führt, dass die von diesen Display-Subregionen 15A, 15B, 15C, 16A, 16B, 16C ausgehenden Lichtkegel 17A, 17B, 17C, 22A, 22B, 22C für eine bestimmte Rotationslage des Auges 4 oder eine bestimmte laterale Verschiebung des Auges 4 die Pupille 13 erreicht. Jede Gruppe 15 von Display-Subregionen 15A, 15B, 15C, 16A, 16B, 16C zusammen mit der ihr zugeordneten Gruppe 18, 20 von Verformungseinrichtung-Subregionen 18A, 18B, 18C, 20A, 20B, 20C entspricht dabei einem anderen Drehwinkel des Auges 4 bzw. einem anderen lateralen Versatz des Auges 4. Durch eine geeignete Anzahl an Gruppen 15, 16 von Display-Subregionen 15A, 15B, 15C, 16A, 16B, 16C und zugeordneten Gruppen 18, 20 von Verformungseinrichtung-Subregionen 18A, 18B, 18C, 20A, 20B, 20C kann dabei realisiert werden, dass für eine bestimmte Anzahl von Drehwinkeln bzw. lateralen Verschiebungen des Auges 4 immer der Lichtkegel 17, 22 wenigstens einer der Gruppen 15, 15 von Display-Subregionen 15A, 15B, 15C, 16A, 16B, 16C die Pupille 13 erreicht.

Wenn in dieser Ausgestaltung dieselbe Bildinformation liefernde Display-Subregionen 15A, 15B, 15C, 16A, 16B, 16C so angeordnet sind, dass bei jeder Augenstellung mehrere Display-Subregionen 15A, 15B, 15C, 16A, 16B, 16C gleichzeitig zur Intensitätsverteilung auf der Netzhaut 8 beitragen, können durch diesen Ansatz auch unerwünschte Intensitätsschwankungen bei kohärenter Beleuchtung, sogenannte Speckles, reduziert werden. Dabei ist es nicht erforderlich, dass sich die von den Display-Subregionen 15A, 15B, 15C, 16A, 16B, 16C ausgehenden Bildinformationen kohärent überlagern. Es ist auch eine partiell kohärente/inkohärente Überlagerung denkbar, wie sie bei breitbandigen Lichtquellen mit kurzer Kohärenzlänge auftritt.

Anstatt wie in dem bisher beschriebenen Ausführungsbeispiel und seinen Abwandlungen mit der Verformungseinrichtung 7 die Richtung, der auf die Subregionen 15A, 15B, 15C des Displays 5 fallenden Wellenfronten zu manipulieren, besteht auch die Möglichkeit, die von dem Display 5 ausgehenden Wellenfronten durch eine nachgelagerte Verformungseinrichtung 107 derart zu beeinflussen, dass von Subregionen 115 ausgehende Öffnungskegel 117 die Pupille 13 des Auges 4 erreichen. Ein derartiges Ausführungsbeispiel ist in Figur 8 dargestellt. In diesem befindet sich ein Display 105 auf der Außenfläche des Grundkörpers 103 und wird direkt von den Ausgangsenden der Lichtleitfasern 11A, 11B oder von am Brillenglas angeordneten Lichtquellen beleuchtet. Das Display 105 ist dabei als teiltransparentes reflektives Display ausgebildet, welches die Wellenfronten der Beleuchtungsstrahlung moduliert und in Richtung auf die Innenfläche des Grundkörpers 103, an der das Verformungselement 107 angeordnet ist, reflektiert. Die Verformung der Wellenfront mittels des Verformungselements 107 erfolgt dabei in dem in Figur 8 dargestellten Ausführungsbeispiel so, dass die Lote der Lichtkegel 117 durch den Drehpunkt 19 des Auges 4 verlaufen. Es sind auch Verformungen möglich, welche die Lote der Lichtkegel 117 auf die Augenpupille richten. Wie im ersten Ausführungsbeispiel gibt es auch im zweiten Ausführungsbeispiel Gruppen von Display-Subregionen und Gruppen von zugeordneten Verformungseinrichtung-Subregionen, um zu erzielen, dass für eine bestimmte Anzahl von Drehwinkeln bzw. lateralen Verschiebungen des Auges 4 immer der Lichtkegel wenigstens einer der Gruppen von Display-Subregionen die Pupille 13 erreicht

Wenn wie im Ausführungsbeispiel aus Figur 8 die Verformungseinrichtung 107 dem Display 105 nachgelagert ist, kann die Verformungseinrichtung durch einen holografischen Film, Mikroprismen, Fresnelstrukturen, Strukturen mit einem variierenden Brechungsindex, etc. realisiert sein.

Im Rahmen der vorliegenden Erfindung besteht auch die Möglichkeit, die Pixel des Displays 5, 105 mit konvergenter oder divergenter Strahlung zu beleuchten, oder die Beleuchtungswinkel dynamisch umzuschalten. In beiden Fällen spannt bereits die Beleuchtung einen Winkelbereich auf, der durch das Display 5, 105 zusätzlich modifiziert werden kann. Hierdurch können deutlich größere Lichtkegel generiert und somit auch die realisierbare Eyebox und das präsentierbare Feld vergrößert werden.

Eine Datenbrille mit einem erfindungsgemäßen Brillenglas ist schematisch in Fig. 13 dargestellt. Jedes der beiden Brillengläser 1A, 1B ist dabei als erfindungsgemäßes Brillenglas ausgebildet. Die kohärentes Licht aussendende Lichtquelle ist in der in Figur 13 dargestellten Datenbrille eine im Brillenbügel 36 angeordnete Laserdiode 37 dargestellt, deren Licht mittels wenigstens einer Lichtleitfaser 11 zum Einkopplungsbereich 9 des Grundkörpers 3 des Brillenglases 1A, 1B geleitet wird. Weiterhin umfasst die Datenbrille eine Steuereinheit 39, die mit den Displays in den Brillengläsern 1A, 1B verbunden ist und diese zum Generieren der auf dem Display darzustellenden Muster ansteuert.

Obwohl in der in Figur 13 dargestellten Datenbrille die Lichtquellen 37 in die Brillenbügel 36 integriert sind, sind auch die mit Bezug auf das erfindungsgemäße Brillenglas beschriebenen Lösungen zum Anordnen der kohärentes Licht aussendenden Lichtquellen möglich, also beispielsweise eine Anordnung der Lichtquellen direkt am oder im Grundkörper des Brillenglases. Ebenso besteht die Möglichkeit, die Lichtquellen 37 statt im Brillenbügel 36 im Brillengestell 41 anzuordnen. Entsprechend kann die Steuereinheit 39 statt wie in Figur 13 dargestellt im Brillengestell 41 auch in einem Brillenbügel 36 angeordnet sein oder auf beide Brillenbügel 36 aufgeteilt sein. Ferner ist eine Anordnung der Lichtquellen 37 und der Steuereinheit 39 in einem separaten Gehäuse denkbar, das über eine oder mehrere Lichtleitfasern bzw. Kabel mit der Brille verbunden ist.

Die vorliegende Erfindung wurde zu Erläuterungszwecken anhand von Ausführungsbeispielen im Detail beschrieben. Wie sich bereits der Beschreibung der Ausführungsbeispiele entnehmen lässt, sind Abwandlungen von den dargestellten Ausführungsbeispielen möglich. Die Erfindung soll daher nicht ausschließlich auf einzelne der dargestellten Ausführungsbeispiele beschränkt sein, sondern lediglich durch die beigefügten Ansprüche.

### Bezugszeichen

- 1: Brillenglas
- 3: Grundkörper
- 4: Auge
- 5: Display
- 6: Augenlinse
- 7: Verformungseinrichtung
- 8: Netzhaut
- 9 A;B: Einkopplungsbereich
- 11 A; B: Lichtleitfaser
- 12: Lot
- 13: Pupille
- 15 A-C: Subregion
- 16 A-C: Subregion
- 17: Lichtkegel
- 18 A-C: Subregion
- 19: Rotationspunkt
- 20 A-C: Subregion
- 21: holographisches optisches Element
- 22: Lichtkegel
- 23: holographisches optisches Element
- 25: holographisches optisches Element
- 27: Laserdiode
- 29: Laserdiode
- 31: Laserdiode
- 33: Optik
- 35: Polarisator
- 36: Brillenbügel
- 37: Laserdiode
- 39: Steuereinheit
- 41: Brillengestell
- 101: Brillenglas
- 103: Grundkörper
- 105: Display
- 107: Verformungseinrichtung
- 109 A;B: Einkopplungsbereich
- 111: Lichtleitfaser
- 115: Subregion
- 117: Lichtkegel

## Patentansprüche

1. Brillenglas (1, 101) für eine Datenbrille, welches aufweist:
- wenigstens eine am Rand des Brillenglases (1, 101) angeordnete und kohärentes Licht aussendende Lichtquellenanordnung (11A, 11B, 27, 29, 31) oder wenigstens einen am Rand des Brillenglases angeordneten Bereich (9A, 9B, 109A, 109B) zum Einkoppeln des Lichtes einer kohärentes Licht aussendenden Lichtquellenanordnung (11A, 11B, 27, 29, 31) oder wenigstens eine in das Brillenglas eingebettete und kohärentes Licht aussendende Lichtquellenanordnung,
- ein transparentes oder teiltransparentes Display (5, 105), welches derart am oder im Brillenglas (1, 101) angeordnet ist, dass von der kohärentes Licht aussendenden Lichtquellenanordnung (11A, 11B, 27, 29, 31) ausgehendes kohärente Licht durch das Display (5, 105) hindurchtritt oder von dem Display (5, 105) reflektiert wird, und das derart ausgebildet ist, dass durch eine entsprechende Ansteuerung des Displays (5, 105) die Wellenfront des kohärenten Lichtes in ihrer Amplitude und/oder ihrer Phase modulierbar ist, und
- eine Verformungseinrichtung (7, 107) zum Verformen der Wellenfront des kohärenten Lichtes vor oder nach der Modulation durch das Display (5, 105) derart, dass ein von einem Pixel ausgehender Lichtkegel (17) auf einen Punkt am oder im Auge gerichtet ist, oder dass durch ein Verformen der Wellenfront des kohärenten Lichtes mittels der Verformungseinrichtung (7, 107) ein von einem Pixel ausgehender Lichtkegel in Richtung auf einen Punkt am oder im Auge abgelenkt wird, **dadurch gekennzeichnet, dass**
- das transparente oder teiltransparente Display (5) Gruppen (15, 16) von Display-Subregionen (15A, 15B, 15C, 16A, 16B, 16C) aufweist, wobei die Display-Subregionen (15A, 15B, 15C, 16A, 16B, 16C) der einzelnen Gruppen (15, 16) über das Display (5) wechselweise lateral verteilt angeordnet sind und jede Gruppe (15, 16) von Display-Subregionen (15A, 15B, 15C, 16A, 16B, 16C) dasselbe Bild generiert, und
- die Verformungseinrichtung (7) zum Verformen der Wellenfront des kohärenten Lichtes vor oder nach der Modulation Gruppen (18, 20) von über die Verformungseinrichtung (7) wechselweise lateral verteilt angeordnete Verformungseinrichtung-Subregionen (18A, 18B, 18C, 20A, 20B, 20C) aufweist, wobei jede der Gruppen (18, 20) von Verformungseinrichtung-Subregionen (18A, 18B, 18C, 20A, 20B, 20C) einer Gruppe (15, 16) von Display-Subregionen (15A, 15B, 15C, 16A, 16B, 16C) zugeordnet ist und wobei die verschiedenen Gruppen (18, 20) von Verformungseinrichtung-Subregionen (18A, 18B, 18C, 20A, 20B, 20C) die Wellenfront derart unterschiedlich verformen, dass die Lichtkegel (17A, 17B, 17C, 22A, 22B, 22C) von dieselbe Bildinformation darstellenden benachbarten Display-Subregionen (15A, 15B, 15C, 16A, 16B, 16C) unterschiedlicher Gruppen (15, 16) von Display-Subregionen (15A, 15B, 15C, 16A, 16B, 16C) auf unterschiedliche Punkte im Raum gerichtet sind oder die Verformungseinrichtung (7) zum Verformen der Wellenfront des kohärenten Lichtes vor oder nach der Modulation eine Anzahl von Verformungsschichten aufweist, wobei jede Verformungsschicht einer der Gruppen (15, 16) von Display-Subregionen (15A, 15B, 15C, 16A, 16B, 16C) zugeordnet ist,
oder
- das Display (5) eine Anzahl von Displayschichten aufweist, bei denen die von den einzelnen Displayschichten ausgehenden Lichtkegel (17A, 17B, 17C, 22A, 22B, 22C) auf unterschiedliche Punkte im Raum gerichtet sind, und die Verformungseinrichtung (7) zum Verformen der Wellenfront des kohärenten Lichtes vor oder nach der Modulation eine Anzahl von Verformungsschichten aufweist, wobei jede Verformungsschicht einer der Displayschichten zugeordnet ist.

2. Brillenglas (1, 101) nach Anspruch 1, in dem das transparente oder teiltransparente Display (5, 105) ein teiltransparentes Display ist, welches intransparente Bereiche aufweist, wobei die Abmessungen der intransparenten Bereiche kleiner als der minimale Pupillendurchmesser des Auges sind und die intransparenten Bereiche durch transparente Bereiche voneinander getrennt sind.

3. Brillenglas (1) nach Anspruch 1 oder Anspruch 2, welches außerdem eine optische Anordnung (33) zum Erzeugen eines divergenten oder eine konvergenten Strahlengangs oder eine optische Anordnung zum dynamischen Umschalten des Beleuchtungswinkels, unter dem das Display (5) beleuchtet wird, umfasst.

4. Brillenglas (1) nach einem der vorangehenden Ansprüche, welches außerdem eine Polarisationsanordnung (35) zum Polarisieren des von der kohärentes Licht aussendenden Lichtquellenanordnung ausgehenden kohärenten Lichtes umfasst.

5. Brillenglas (1, 101) nach einem der vorangehenden Ansprüche, in dem die kohärentes Licht aussendende Lichtquellenanordnung wenigstens zwei Lichtquellen (27, 29, 31) mit unterschiedlichen Emissionswellenlängen umfasst oder eine in ihrer Emissionswellenlänge durchstimmbare Lichtquelle umfasst oder eine in mehreren Emissionswellenlängen gleichzeitig emittierende Lichtquelle umfasst.

6. Brillenglas (1, 101) nach Anspruch 5, welches eine Einrichtung zum parallelen Einkoppeln der einzelnen Emissionswellenlängen in das Brillenglas umfasst.

7. Brillenglas (1) nach Anspruch 6, in dem die Verformungseinrichtung (7) zum Verformen der Wellenfront des kohärenten Lichtes wenigstens zwei Verformungsschichten (21, 23, 25) aufweist, die jeweils eine Verformung der Wellenfront in den unterschiedlichen Emissionswellenlängen herbeiführen, oder die Verformungseinrichtung (7) in wenigstens zwei Verformungssegmentgruppen unterteilt ist, wobei sich die Segmente einer Verformungssegmentgruppe von den Segmenten der jeweils anderen Verformungssegmentgruppen dadurch unterscheiden, dass sie eine Verformung der Wellenfront in unterschiedlichen Emissionswellenlängen herbeiführen, und wobei die Segmente der Verformungssegmentgruppen im Wechsel lateral in der Verformungseinrichtung verteilt sind.

8. Brillenglas (1, 101) nach Anspruch 5, welches eine Einrichtung zum zeitsequentiellen Einkoppeln der einzelnen Emissionswellenlängen in das Brillenglas umfasst.

9. Datenbrille mit wenigstens einem Brillenglas (1A, 1B) nach einem der vorangehenden Ansprüche und mit einer kohärentes Licht aussendenden Lichtquellenanordnung (37), sofern die Lichtquellenanordnung nicht Teil des Brillenglases ist.

10. Datenbrille nach Anspruch 9 welche eine kohärentes Licht aussendende Lichtquellenanordnung (11, 37) umfasst, die nicht Teil des Brillenglases (1A, 1B) ist, und in der die Lichtquellenanordnung (11, 37) eine Anordnung zum Erzeugen eines divergenten oder eine konvergenten Strahlengangs oder eine optische Anordnung zum dynamischen Umschalten des Beleuchtungswinkels umfasst.

11. Datenbrille nach Anspruch 9 oder Anspruch 10, welche eine kohärentes Licht aussendende Lichtquellenanordnung (11, 37) umfasst, die nicht Teil des Brillenglases (1A, 1B) ist und in der die Lichtquellenanordnung (11, 37) eine Polarisationsanordnung zum Polarisieren des von der kohärentes Licht aussendenden Lichtquellenanordnung ausgehenden kohärenten Lichtes umfasst.

12. Datenbrille nach einem der Ansprüche 9 bis 11, welche eine kohärentes Licht aussendende Lichtquellenanordnung (11, 37) umfasst, die nicht Teil des Brillenglases (1A, 1B) ist, wobei die kohärentes Licht aussendende Lichtquellenanordnung (11, 37) wenigstens zwei Lichtquellen mit unterschiedlichen Emissionswellenlängen umfasst oder eine in ihrer Emissionswellenlänge durchstimmbare Lichtquelle oder eine in mehreren Emissionswellenlängen gleichzeitig emittierende Lichtquelle umfasst.

13. Verfahren zum Generieren eines Bildes auf der Netzhaut (8) einer eine Datenbrille nach einem der Ansprüche 9 bis 12 tragenden Person, in dem das Erzeugen des Bildes dadurch geschieht, dass
- ein auf der Netzhaut (8) zu generierendes Bild vorgegeben wird,
- eine Wellenfront am Ort des Netzhaut (8) ermittelt wird, die auf der Netzhaut (8) zu dem zu generierenden Bild führt,
- das Display (5, 105) außerhalb einer zur Netzhaut (8) der die Datenbrille tragenden Person optisch konjugierten Ebene positioniert wird,
- durch Rückwärtspropagation der Wellenfront am Ort des Netzhaut (8) eine Wellenfront unmittelbar hinter dem Display (5, 105) ermittelt wird,
- das Display (5, 105) derart angesteuert wird, dass die Wellenfront des von der kohärentes Licht aussendenden Lichtquellenanordnung (11, 37) ausgehenden kohärenten Lichtes derart manipuliert wird, dass unmittelbar hinter dem Display (5, 105) eine Wellenfront entsteht, die der durch Rückwärtspropagation der Wellenfront am Ort des Netzhaut (8) ermittelten Wellenfron entspricht, und
- durch ein Verformen der Wellenfront des kohärenten Lichtes mittels der Verformungseinrichtung (7, 107) die Wellenfront des Beleuchtungslichtes, mit dem die Pixel des Displays (5, 105) beleuchtet werden, so eingestellt wird, dass ein von einem Pixel ausgehender Lichtkegel (17) auf einen Punkt am oder im Auge gerichtet ist, oder durch ein Verformen der Wellenfront des kohärenten Lichtes mittels der Verformungseinrichtung (7, 107) ein von einem Pixel ausgehender Lichtkegel in Richtung auf einen Punkt am oder im Auge abgelenkt wird.

14. Verfahren nach Anspruch 13, in dem die Ansteuerung des Displays (5, 105) derart erfolgt, dass die hinter dem Display (5, 105) entstehende Wellenfront Lichtkegel (17) aufweist, die jeweils in eine vorgegebene Richtung geneigt sind.

15. Verfahren nach Anspruch 14, in dem die vorgegebene Richtung zeitlich variiert.

16. Verfahren nach Anspruch 14, in dem die Blickrichtung des Auges (6) erfasst wird und die vorgegebene Richtung an die Blickrichtung des Auges (6) angepasst wird.

## Claims

1. Lens (1, 101) for a pair of smartglasses, said lens comprising:
- at least one light source arrangement (11A, 11B, 27, 29, 31) that is arranged at the edge of the lens (1, 101) and that emits coherent light, or at least one region (9A, 9B, 109A, 109B), arranged at the edge of the lens, for coupling in light from a light source arrangement (11A, 11B, 27, 29, 31) that emits coherent light, or at least one light source arrangement that is embedded in the lens and emits coherent light,
- a transparent or partly transparent display (5, 105), said display being arranged on or in the lens (1, 101) in such a way that coherent light emanating from the light source arrangement (11A, 11B, 27, 29, 31) that emits coherent light passes through the display (5, 105) or is reflected by the display (5, 105) and said display being embodied in such a way that the wavefront of the coherent light is modulable in terms of its amplitude and/or its phase by an appropriate actuation of the display (5, 105), and
- a deformation device (7, 107) for deforming the wavefront of the coherent light before or after the modulation by the display (5, 105), in such a way that a light cone (17) emanating from a pixel is directed at a point in or on the eye or that a deformation of the wavefront of the coherent light by means of the deformation device (7, 107) deflects a light cone emanating from a pixel in the direction of a point at or in the eye, **characterized in that**
- the transparent or partly transparent display (5) has groups (15, 16) of display subregions (15A, 15B, 15C, 16A, 16B, 16C), wherein the display subregions (15A, 15B, 15C, 16A, 16B, 16C) of the individual groups (15, 16) are arranged over the display (5) with an alternating lateral distribution and each group (15, 16) of display subregions (15A, 15B, 15C, 16A, 16B, 16C) generates the same picture, and
- the deformation device (7) for deforming the wavefront of the coherent light has groups (18, 20) of deformation device subregions (18A, 18B, 18C, 20A, 20B, 20C) that are arranged over the deformation device (7) with an alternating lateral distribution, before or after the modulation, wherein each of the groups (18, 20) of deformation device subregions (18A, 18B, 18C, 20A, 20B, 20C) is associated with a group (15, 16) of display subregions (15A, 15B, 15C, 16A, 16B, 16C) and wherein the various groups (18, 20) of deformation device subregions (18A, 18B, 18C, 20A, 20B, 20C) deform the wavefront in such a different way that the light cones (17A, 17B, 17C, 22A, 22B, 22C) of adjacent display subregions (15A, 15B, 15C, 16A, 16B, 16C), representing the same image information item, of different groups (15, 16) of display subregions (15A, 15B, 15C, 16A, 16B, 16C) are directed to different points in space, or the deformation device (7) for deforming the wavefront of the coherent light has a number of deformation layers before or after the modulation, wherein each deformation layer is associated with one of the groups (15, 16) of display subregions (15A, 15B, 15C, 16A, 16B, 16C),
or
- the display (5) has a number of display layers, in which the light cones (17A, 17B, 17C, 22A, 22B, 22C) emanating from the individual display layers are directed to different points in space, and the deformation device (7) for deforming the wavefront of the coherent light has a number of deformation layers before or after the modulation, wherein one of the display layers is associated with each deformation layer.

2. Lens (1, 101) according to Claim 1, wherein the transparent or partly transparent display (5, 105) is a partly transparent display, which has non-transparent regions, wherein the dimensions of the non-transparent regions are smaller than the minimum pupil diameter of the eye and the non-transparent regions are separated from one another by transparent regions.

3. Lens (1) according to Claim 1 or Claim 2, moreover comprising an optical arrangement (33) for producing a divergent or a convergent beam path or an optical arrangement for dynamically switching the illumination angle at which the display (5) is illuminated.

4. Lens (1) according to any of the preceding claims, moreover comprising a polarization arrangement (35) for polarizing the coherent light emanating from the light source arrangement that emits coherent light.

5. Lens (1, 101) according to any of the preceding claims, wherein the light source arrangement that emits coherent light comprises at least two light sources (27, 29, 31) with different emission wavelengths or comprises a light source that is tunable in terms of its emission wavelength or comprises a light source that simultaneously emits in a plurality of emission wavelengths.

6. Lens (1, 101) according to Claim 5, comprising a device for coupling the individual emission wavelengths into the lens in parallel.

7. Lens (1) according to Claim 6, wherein the deformation device (7) for deforming the wavefront of the coherent light has at least two deformation layers (21, 23, 25), which each bring about a deformation of the wavefront in the different emission wavelengths, or the deformation device (7) is subdivided into at least two deformation segment groups, wherein the segments of a deformation segment group differ from the segments of the respective other deformation segment groups in that they bring about a deformation of the wavefront in different emission wavelengths, and wherein the segments of the deformation segment groups are distributed in alternating lateral fashion in the deformation device.

8. Lens (1, 101) according to Claim 5, comprising a device for coupling the individual emission wavelengths into the lens in time-sequential fashion.

9. Pair of smartglasses comprising at least one lens (1A, 1B) according to any of the preceding claims and comprising a light source arrangement (37) that emits coherent light provided the light source arrangement is not part of the lens.

10. Pair of smartglasses according to Claim 9, comprising a light source arrangement (11, 37) that emits coherent light, said light source arrangement not being part of the lens (1A, 1B), and in which pair of smartglasses the light source arrangement (11, 37) comprises an arrangement for producing a divergent or a convergent beam path or an optical arrangement for dynamically switching the illumination angle.

11. Pair of smartglasses according to Claim 9 or Claim 10, comprising a light source arrangement (11, 37) that emits coherent light, said light source arrangement not being part of the lens (1A, 1B), and in which pair of smartglasses the light source arrangement (11, 37) comprises a polarization arrangement for polarizing the coherent light emanating from the light source arrangement that emits coherent light.

12. Pair of smartglasses according to any of Claims 9 to 11, comprising a light source arrangement (11, 37) that emits coherent light, said light source arrangement not being part of the lens (1A, 1B), wherein the light source arrangement (11, 37) that emits coherent light comprises at least two light sources with different emission wavelengths or comprises a light source that is tunable in terms of its emission wavelength or a light source that simultaneously emits in a plurality of emission wavelengths.

13. Method for generating a picture on the retina (8) of a person wearing a pair of smartglasses according to any of Claims 9 to 12, wherein the picture is produced by virtue of
- a picture to be generated on the retina (8) being specified,
- a wavefront at the location of the retina (8) that leads to the picture to be generated on the retina (8) being ascertained,
- the display (5, 105) being positioned outside of a plane that is optically conjugate to the retina (8) of the person wearing the pair of smartglasses,
- a wavefront immediately behind the display (5, 105) being ascertained by backward propagation of the wavefront at the location of the retina (8),
- the display (5, 105) being actuated in such a way that the wavefront of the coherent light emanating from the light source arrangement (11, 37) that emits coherent light is manipulated in such a way that a wavefront corresponding to the wavefront ascertained by backward propagation of the wavefront at the location of the retina (8) arises immediately behind the display (5, 105), and
- the wavefront of the illumination light, by means of which the pixels of the display (5, 105) are illuminated, being set by a deformation of the wavefront of the coherent light by means of the deformation device (7, 107) in such a way that a light cone (17) emanating from a pixel is directed to a point on or in the eye, or a light cone emanating from a pixel being deflected in the direction of a point on or in the eye by a deformation of the wavefront of the coherent light by means of the deformation device (7, 107).

14. Method according to Claim 13, wherein the display (5, 105) is actuated in such a way that the wavefront arising behind the display (5, 105) has light cones (17) that are each inclined in a specified direction.

15. Method according to Claim 14, wherein the specified direction varies over time.

16. Method according to Claim 14, wherein the viewing direction of the eye (6) is captured, and the specified direction is matched to the viewing direction of the eye (6) .

## Revendications

1. Verre de lunettes (1, 101) pour des lunettes à données, ou "intelligentes", qui comprend :
- au moins un agencement (11A, 11B, 27, 29, 31) source de lumière agencé sur le bord du verre de lunettes (1, 101) et émettant une lumière cohérente ou au moins une zone (9A, 9B, 109A, 109B) agencée sur le bord du verre de lunettes pour la liaison de la lumière d'un agencement (11A, 11B, 27, 29, 31) source de lumière émettant une lumière cohérente ou au moins un dispositif source de lumière intégré dans le verre de lunettes et émettant une lumière cohérente,
- un afficheur (5, 105) transparent ou partiellement transparent, qui est agencé sur ou dans le verre de lunettes (1, 101) de telle sorte que la lumière cohérente émise par l'agencement (11A, 11B, 27, 29, 31) source de lumière émettant de la lumière cohérente traverse l'afficheur (5, 105) ou est réfléchi par l'afficheur (5, 105), et qui est conçu de telle sorte que, par une commande correspondante de l'afficheur (5, 105), le front d'onde de la lumière cohérente est apte à être modulé dans son amplitude et/ou sa phase, et
- un dispositif de déformation (7, 107) pour déformer le front d'onde de la lumière cohérente avant ou après la modulation par l'afficheur (5, 105) de telle sorte qu'un cône de lumière (17) partant d'un pixel soit dirigé vers un point sur ou dans l'œil, ou que par une déformation du front d'onde de la lumière cohérente au moyen du dispositif de déformation (7, 107), un cône de lumière partant d'un pixel soit dévié en direction d'un point sur ou dans l'œil,
**caractérisé en ce que**
- l'afficheur (5) transparent ou partiellement transparent comprend des groupes (15, 16) de sous-zones d'affichage (15A, 15B, 15C, 16A, 16B, 16C), les sous-zones d'affichage (15A, 15B, 15C, 16A, 16B, 16C) des groupes individuels (15, 16) étant réparties latéralement de manière alternée sur l'afficheur (5) et chaque groupe (15, 16) de sous-zones d'affichage (15A, 15B, 15C, 16A, 16B, 16C) générant la même image, et
- le dispositif de déformation (7) comprend, pour déformer le front d'onde de la lumière cohérente avant ou après la modulation, des groupes (18, 20) de sous-zones de dispositif de déformation (18A, 18B, 18C, 20A, 20B, 20C) répartis latéralement en alternance sur le dispositif de déformation (7), chacun des groupes (18, 20) de sous-zones de dispositif de déformation (18A, 18B, 18C, 20A, 20B, 20C) étant associé à un groupe (15, 16) de sous-zones d'affichage (15A, 15B, 15C, 16A, 16B, 16C), et les différents groupes (18, 20) de sous-zones de dispositif de déformation (18A, 18B, 18C, 20A, 20B, 20C) déforment le front d'onde différemment de telle sorte que les cônes de lumière (17A, 17B, 17C, 22A, 22B, 22C) de sous-zones d'affichage adjacentes (15A, 15B, 15C, 16A, 16B, 16C) représentant la même information d'image de différents groupes (15, 16) de sous-zones d'affichage (15A, 15B, 15C, 16A, 16B, 16C) sont dirigés vers des points différents dans l'espace ou **en ce que** le dispositif de déformation (7) destiné à déformer le front d'onde de la lumière cohérente avant ou après la modulation comprend un certain nombre de couches de déformation, chaque couche de déformation étant associée à l'un des groupes (15, 16) de sous-zones d'affichage (15A, 15B, 15C, 16A, 16B, 16C),
ou
- l'afficheur (5) comprend un certain nombre de couches d'affichage dans lesquelles les cônes de lumière (17A, 17B, 17C, 22A, 22B, 22C) issus des différentes couches d'affichage sont dirigés vers différents points de l'espace, et le dispositif de déformation (7) destiné à déformer le front d'onde de la lumière cohérente avant ou après la modulation comporte un certain nombre de couches de déformation, chaque couche de déformation étant associée à l'une des couches d'affichage.

2. Verre de lunettes (1, 101) selon la revendication 1, dans lequel l'afficheur (5, 105) transparent ou partiellement transparent est un afficheur partiellement transparent qui présente des zones non transparentes, les dimensions des zones non transparentes étant inférieures au diamètre minimal de la pupille de l'œil et les zones non transparentes étant séparées les unes des autres par des zones transparentes.

3. Verre de lunettes (1) selon la revendication 1 ou la revendication 2, comprenant en outre un agencement optique (33) de génération d'un trajet optique divergent ou convergent ou un agencement optique de commutation dynamique de l'angle d'éclairage sous lequel l'afficheur (5) est éclairé.

4. Verre de lunettes (1) selon l'une des revendications précédentes, comprenant en outre un agencement de polarisation (35) pour polariser la lumière cohérente provenant de l'agencement de source de lumière émettant une lumière cohérente.

5. Verre de lunettes (1, 101) selon l'une des revendications précédentes, dans lequel l'agencement source de lumière émettant une lumière cohérente comprend au moins deux sources de lumière (27, 29, 31) ayant des longueurs d'onde d'émission différentes ou comprend une source de lumière accordable dans sa longueur d'onde d'émission ou comprend une source de lumière émettant simultanément dans plusieurs longueurs d'onde d'émission.

6. Verre de lunettes (1, 101) selon la revendication 5, qui comprend un dispositif pour relier en parallèle les différentes longueurs d'onde d'émission dans le verre de lunettes.

7. Verre de lunettes (1) selon la revendication 6, dans lequel le dispositif de déformation (7) pour déformer le front d'onde de la lumière cohérente comprend au moins deux couches de déformation (21, 23, 25) qui provoquent chacune une déformation du front d'onde dans les différentes longueurs d'onde d'émission, ou le dispositif de déformation (7) est divisé en au moins deux groupes de segments de déformation, les segments d'un groupe de segments de déformation se distinguant des segments des autres groupes de segments de déformation en ce qu'ils provoquent une déformation du front d'onde dans différentes longueurs d'onde d'émission, et les segments des groupes de segments de déformation étant répartis latéralement en alternance dans le dispositif de déformation.

8. Verre de lunettes (1, 101) selon la revendication 5, comprenant un dispositif d'injection séquentielle dans le temps des différentes longueurs d'onde d'émission dans le verre de lunettes.

9. Lunettes à données, ou "intelligentes", comprenant au moins un verre de lunettes (1A, 1B) selon l'une des revendications précédentes et un agencement (37) source de lumière émettant une lumière cohérente, à condition que l'agencement source de lumière ne fasse pas partie du verre de lunettes.

10. Lunettes à données, ou "intelligentes", selon la revendication 9, qui comprennent un agencement (11, 37) source de lumière émettant une lumière cohérente, qui ne fait pas partie du verre de lunettes (1A, 1B), et dans lesquelles l'agencement (11, 37) source de lumière comprend un agencement pour générer un trajet de rayons divergent ou un trajet de rayons convergent ou un agencement optique pour commuter dynamiquement l'angle d'éclairage.

11. Lunettes à données, ou "intelligentes", selon la revendication 9 ou la revendication 10, comprenant un agencement (11, 37) source de lumière cohérente qui ne fait pas partie du verre de lunettes (1A, 1B) et dans lesquelles l'agencement (11, 37) source de lumière comprend un agencement de polarisation pour polariser la lumière cohérente émise par l'agencement source de lumière cohérente.

12. Lunettes à données, ou "intelligentes", selon l'une des revendications 9 à 11, qui comprennent un agencement (11, 37) source de lumière émettant de la lumière cohérente qui ne fait pas partie du verre de lunettes (1A, 1B), l'agencement (11, 37) source de lumière émettant de la lumière cohérente comprenant au moins deux sources de lumière ayant des longueurs d'onde d'émission différentes ou comprenant une source de lumière dont la longueur d'onde d'émission est accordable ou une source de lumière émettant simultanément dans plusieurs longueurs d'onde d'émission.

13. Procédé de génération d'une image sur la rétine (8) d'une personne portant des lunettes à données, ou "intelligentes", selon l'une des revendications 9 à 12, dans lequel la génération de l'image est effectuée par le fait que
- une image à générer sur la rétine (8) est prédéfinie,
- un front d'onde est déterminé à l'endroit de la rétine (8), qui conduit à l'image à générer sur la rétine (8),
- l'afficheur (5, 105) est positionné en dehors d'un plan optiquement conjugué à la rétine (8) de la personne portant les lunettes à données, ou "intelligentes",
- un front d'onde est déterminé directement derrière l'afficheur (5, 105) par rétropropagation du front d'onde à l'endroit de la rétine (8),
- l'afficheur (5, 105) est commandé de telle sorte que le front d'onde de la lumière cohérente émise par le dispositif source de lumière cohérente (11, 37) est manipulé de telle sorte qu'il se forme directement derrière l'afficheur (5, 105) un front d'onde qui correspond au front d'onde déterminé par rétropropagation du front d'onde à l'endroit de la rétine (8), et
- par une déformation du front d'onde de la lumière cohérente au moyen du dispositif de déformation (7, 107), le front d'onde de la lumière d'éclairage avec laquelle les pixels de l'afficheur (5, 105) sont éclairés est réglé de telle sorte qu'un cône de lumière (17) émanant d'un pixel est dirigé vers un point sur ou dans l'œil, ou par une déformation du front d'onde de la lumière cohérente au moyen du dispositif de déformation (7, 107), un cône de lumière émanant d'un pixel est dévié en direction d'un point sur ou dans l'œil.

14. Procédé selon la revendication 13, dans lequel la commande de l'afficheur (5, 105) est effectuée de telle sorte que le front d'onde formé derrière l'afficheur (5, 105) présente des cônes de lumière (17) qui sont chacun inclinés dans une direction prédéterminée.

15. Procédé selon la revendication 14, dans lequel la direction prédéterminée varie dans le temps.

16. Procédé selon la revendication 14, dans lequel la direction de regard de l'œil (6) est détectée et la direction prédéfinie est adaptée à la direction de regard de l'œil (6) .
